# EUROPEAN PATENT SPECIFICATION

(11) **EP 2 670 252 B1**
(45) Date of publication and mention of the grant of the patent: **02.05.2018**
(21) Application number: 12704730.6
(22) Date of filing: 31.01.2012
(51) Int. Cl.: A23G 1/02, A23G 1/00

(54) **COCOA SENSORY CHARACTERISTICS**
SENSORISCHE MERKMALE VON KAKAO
CARACTÉRISTIQUES SENSORIELLES DU CACAO

(30) Priority: 31.01.2011 EP 11152791; 31.01.2011 US 201113017627
(43) Date of publication of application: 11.12.2013
(73) Proprietor: Barry Callebaut AG, 8005 Zurich (CH)
(72) Inventor: BERNAERT, Herwig, B-9280 Lebbeke-Wieze (BE); CAMU, Nicholas, B-9280 Lebbeke-Wieze (BE); LOHMÜLLER, Tobias, B-9280 Lebbeke-Wieze (BE)
(74) Representative: Michalík, Andrej
(86) International application number: PCT/EP2012/051605
(87) International publication number: WO 2012/104321

(56) References cited:
- WO-A1-2007/031186
- LAGUNES GALVEZ ET AL: "Study on the microflora and biochemistry of cocoa fermentation in the Dominican Republic", INTERNATIONAL JOURNAL OF FOOD MICROBIOLOGY, ELSEVIER SCIENCE PUBLISHERS, AMSTERDAM, NL, vol. 114, no. 1, 3 February 2007 (2007-02-03), pages 124-130, XP005871979, ISSN: 0168-1605, DOI: 10.1016/J.IJFOODMICRO.2006.10.041

## Description

### FIELD OF THE INVENTION

The invention relates to cocoa material, such as cocoa beans and products derived therefrom, such as chocolate. The invention in particular relates to flavour characteristics of such cocoa materials.

Solely for the purposes of prosecution in the U.S., this patent application is considered a continuation-in-part of the patent application US 13/017,627 filed on January 31, 2011, entitled "Cocoa sensory characteristics", which is hereby expressly incorporated by reference in its entirety for all purposes.

### BACKGROUND OF THE INVENTION

Cocoa beans are the principal raw material for chocolate production. These seeds are derived from the fruit pods of the tree *Theobroma cacao,* which is cultivated in plantations in the equatorial zone, e.g., in Ivory Coast, Ghana, and Indonesia. The cocoa beans are embedded in a mucilaginous pulp inside the pods. Raw cocoa beans have an astringent, unpleasant taste and flavour, and have to be fermented, dried, and roasted to obtain the desired characteristic cocoa flavour and taste. The chocolate flavour is influenced by the origin of the cocoa beans, the cocoa cultivar, the on-the-farm fermentation and drying process, and the roasting and further processing performed by the chocolate manufacturer.

After removal of the beans from the pods, the first step in cocoa processing for example for the cocoa variety Forastero is a spontaneous 6 to 10-day fermentation of beans and pulp in heaps, boxes, baskets, or trays. During such process, the beans are freed from adhering pulp. At the end of this period the decomposed pulp is generally washed away by water and the beans dried to produce the cocoa beans of commerce.

Various factors are known to influence the qualitative aspects of cocoa beans as well as products derived therefrom. Besides *Theobroma cacao* variety or subspecies, main determinants of cocoa quality include a plethora of environmental factors, among which country of origin, farm, pod ripeness, post-harvest pod age and storage, pod diseases, variations in pulp/bean ratio, the fermentation method, size of the batch, season and weather conditions, the turning frequency or no turning, the fermentation time, etc. It is well known in the art that the geographical origin of the cocoa plants, and hence the cocoa beans, is of particular importance for various quality associated parameters of the beans as well as the products derived therefrom. In this respect, important geography-associated parameters affecting the taste characteristics include soil type and climate. It is for instance known that cocoa beans (and derived products) originating from South-East Asia, West-Africa, or South-America have different overall as well as specific flavour characteristics, even irrespective of *Theobroma* cacao variety or subtype, thereby underscoring the dominant effects of geography-associated parameters on the taste characteristics, which supersedes natural variation which might exist within *Theobroma cacao* varieties or subtypes within a given geographical region.

Cocoa beans of South-East Asian provenance, while being cheaper, are known to be qualitatively, in particular organoleptically, inferior to cocoa beans of West-African provenance. In particular, beans originating from South-East Asia are for instance characterised by increased off-note flavours, as well as astringency, while the typical cocoa flavour is reduced, relative to cocoa beans originating from West-Africa.

WO 2007/031186 A1 discloses fermentation of organic material, particularly plant material and more specifically cocoa material, such as beans and pulp, and relates to methods of regulating the fermentation of such materials, in particular using compositions comprising specific microorganisms, such as bacteria and/or yeast.

Gálvez et al. (International Journal of Food Microbiology 2007; 114: 124-130) study the microflora and biochemistry of cocoa fermentation in the Dominican Republic. The yeasts isolated belong to the genera Hanseniaspora and Candida, the lactic acid bacteria to the genus Lactobacillus, and the acetic acid bacteria to the genus Acetobacter. The differences compared to other fermentation trials concern the micropopulation from a qualitative point of view.

It is an object of the present invention to provide cocoa beans, as well as products derived therefrom, with improved organoleptic characteristics.

### SUMMARY OF THE INVENTION

The present inventors have surprisingly found that cocoa beans from a specific geographic origin, as well as derived products therefrom, can be obtained which substantially mimic sensory characteristics, such as taste characteristics, which are representative for cocoa beans from a different geographic origin. Due to the dominant geographical effects on organoleptic or sensory characteristics of cocoa beans, and in particular taste characteristics, closely matched sensory or taste characteristics of cocoa beans from different geographic origins are completely unexpected.

In a first aspect, the invention relates to a bulk quantity of fermented cocoa beans or a derivative thereof of Asian origin having at least three sensory characteristics, wherein each of said sensory characteristics is scored on a scale between an minimum score (A) and a maximum score (B) and wherein the score of each of said sensory characteristic differs by less than 0.2x(B-A) of the score of the corresponding sensory characteristic as presented in the following Table:

| Sensory characteristic | Absolute score | Relative score |
|---|---|---|
| | (minimum score A = 0) | (minimum score A = 0) |
| | (maximum score B = 7) | (maximum score B = 1) |
| Astringent | 0 | 0 |
| Cocoa | 3 | 0.43 |
| Bitter | 1 | 0.14 |
| Flowery | 0 | 0 |

wherein said bulk quantity is at least 55 kg of cocoa beans or at least 1 ton of cocoa liquor.

Also described herein is a bulk quantity of cocoa beans, preferably fermented cocoa beans, or a derivative thereof of a first origin having at least one, preferably at least two, more preferably at least three sensory characteristic(s), preferably taste characteristic(s) which is (are) substantially equivalent compared to the corresponding sensory characteristic(s), preferably taste characteristic(s), of a bulk quantity of cocoa beans, preferably fermented cocoa beans, or a derivative thereof of a second origin, wherein said first and said second origin are different Also described herein, said first origin is Asian origin, preferably South-East Asian, more preferably Malaysian or Indonesian, such as for example Sulawesian. Also described herein, said second origin is West-African origin.

The invention also relates to a mixture or blend of (1) a bulk quantity of cocoa beans, preferably fermented cocoa beans, or derivatives thereof according to the invention, and (2) a bulk quantity of cocoa beans, preferably fermented cocoa beans, or derivatives thereof of West-African origin.

According to the invention, each of said sensory characteristics, preferably taste characteristics, is scored on a scale, typically on a numerical scale, preferably between a minimum score (A) and a maximum score (B), and the difference between each of said corresponding sensory characteristic scores is less than 0.20x(B-A), e.g., less than 0.15x(B-A) or less than 0.10x(B-A). For example, a commonly employed scale for scoring sensory characteristics of cocoa beans or their derivatives such as cocoa liquor can extend from 0 (minimum) to 7 (maximum), whereby the difference less than 0.20x(B-A) between said at least one corresponding sensory characteristic scores would amount to less than 1.4.

Also described herein is one or more sensory characteristic selected from the group comprising or consisting of astringent, bitter, sour, acidity, fruity, flowery, total intensity, aftertaste intensity, aftertaste time, cocoa taste, chocolate taste, baggy, smoky, mouldy, earthy, aromatic, winey, putrid, carbon, and grilled.

Also described herein is one or more sensory characteristic selected from the group comprising or consisting of astringent, bitter, sour, acidity, fruity, flowery, total intensity, aftertaste intensity, aftertaste time, cocoa taste, chocolate taste, baggy, smoky, mouldy, earthy, aromatic, winey, and grilled.

Also described herein is one or more sensory characteristic selected from the group comprising or consisting of astringent, cocoa taste, bitter, flowery, aftertaste time and aftertaste intensity.

Also described herein is one or more sensory characteristic selected from the group comprising or consisting of astringent, cocoa taste, bitter and flowery.

For example, the at least one sensory characteristic may be any one, any two or all three of astringent, cocoa taste and bitter.

In an embodiment, the bulk quantity of cocoa beans or a derivative thereof of a first origin as described herein is substantially non-astringent and/or non-flowery.

The cocoa beans according to the invention as described herein are preferably fermented, and optionally and preferably dried, and optionally and preferably roasted.

In an embodiment, the derivative of the cocoa beans according to the invention as described herein is selected from the group comprising cocoa powder, cocoa butter, cocoa nibs, cocoa pulp, cocoa liquor, cocoa extract, cocoa flakes, cocoa mass, cocoa cake, and chocolate. Preferably, the sensory characteristic may be determined in cocoa liquor, which ensures advantageously homogenised sensory sensation. In another preferred embodiment, the sensory characteristic may be determined in chocolate. As the sensory characteristics of cocoa liquor have a dominant effect on sensory characteristics of chocolate derived therefrom, cocoa liquor sensory characteristic scores can be easily translated into chocolate sensory characteristic scores. In other words, comparable cocoa liquor sensory characteristics (e.g. between cocoa liquor derived from cocoa beans of different origins, as described herein) result in comparable chocolate sensory characteristics (for chocolate prepared according to the same chocolate recipe). By means of example, a standard dark chocolate (40% liquor) or a standard milk chocolate recipe (11% liquor) derived from beans according to the invention has comparable taste characteristics as respectively a standard dark chocolate (40% liquor) or a standard milk chocolate recipe (11% liquor) derived from beans originating from West-Africa.

Also described herein is (the bulk quantity of) cocoa beans, preferably fermented cocoa beans, or a derivative thereof of a first origin as described herein, or alternatively a mixture or blend of (the bulk quantity of) cocoa beans, preferably fermented cocoa beans, or a derivative thereof of a first origin and a second origin as described herein, having at least one, preferably at least two, more preferably at least three sensory characteristics, the relative score of each of which differs by less than 0.20xB, e.g., by less than 0.15xB or by less than 0.10xB, from the relative score of the corresponding sensory characteristic as presented in any one of Tables 2 to 11. The sensory characteristic may be preferably selected from the group comprising or consisting of astringent, cocoa taste, bitter and flowery.

In an embodiment, the invention relates to the bulk quantity of fermented cocoa beans or a derivative thereof according to the invention, having a composite sensory characteristic deviation which is scored as the average of the difference between the scores of the sensory characteristic of said bulk quantity of fermented cocoa beans, or a derivative thereof, of said Asian origin and the corresponding sensory characteristics as presented in any one of Tables 2 to 6, wherein said composite sensory characteristic deviation score is less than 0.1x(B-A).

Also described herein is (the bulk quantity of) cocoa beans, preferably fermented cocoa beans, or a derivative thereof of a first origin as described herein, or alternatively a mixture or blend of (the bulk quantity of) cocoa beans, preferably fermented cocoa beans, or a derivative thereof of a first origin and a second origin as described herein, having a composite sensory characteristic deviation - which is scored as the average of the differences between the scores of two or more sensory characteristics of said bulk quantity of cocoa beans, preferably fermented cocoa beans, or a derivative thereof, of said first origin, or alternatively of said blend or mixture, and the corresponding sensory characteristics of said bulk quantity of cocoa beans, preferably fermented cocoa beans, or a derivative thereof, of said second origin - wherein said composite sensory characteristic deviation score is less than 0.10x(B-A), e.g., less than 0.05x(B-A).

Also described herein is (the bulk quantity of) cocoa beans, preferably fermented cocoa beans, or a derivative thereof of a first origin as described herein, or alternatively a mixture or blend of (the bulk quantity of) cocoa beans, preferably fermented cocoa beans, or a derivative thereof of a first origin and a second origin as described herein, having a composite sensory characteristic deviation - which is scored as the average of the differences between the relative scores of two or more sensory characteristic of said bulk quantity of cocoa beans, preferably fermented cocoa beans, or a derivative thereof, of said first origin, or alternatively of said blend or mixture, and the relative scores of the corresponding sensory characteristics as presented in any one of Tables 2 to 11 - wherein said composite sensory characteristic deviation score is less than 0.10xB, e.g., less than 0.05xB.

Said composite sensory characteristic may preferably comprise at least one, preferably at least two, more preferably at least three of the sensory characteristics selected from the group comprising or consisting of astringent, bitterness, sour, fruity, flowery, total intensity, aftertaste intensity, aftertaste time, cocoa taste, putrid, winey, carbon, and grilled, preferably selected from the group comprising or consisting of astringent, cocoa taste, bitter and flowery.

Said composite sensory characteristic may preferably comprise at least one, preferably at least two, more preferably at least three of the sensory characteristics selected from the group comprising or consisting of astringent, bitterness, sour, fruity, flowery, total intensity, aftertaste intensity, aftertaste time, cocoa taste and grilled, preferably selected from the group comprising or consisting of astringent, cocoa taste, bitter and flowery.

In an aspect, the invention also relates to an edible product comprising at least one derivative, mixture, or blend according to the invention as described herein. In a preferred embodiment, said edible product is chocolate, such as dark (or black) chocolate, milk chocolate or white chocolate.

In another aspect, the invention relates to a method for obtaining the bulk quantity of cocoa beans or a derivative thereof according to the invention as described herein, comprising the step of fermenting cocoa beans of said first origin with a microbial composition comprising:
- *Lactobacillus plantarum, Lactobacillus fermentum,* and *Acetobacter pasteurianus,*
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida.*

A preferred embodiment concerns a method for obtaining the bulk quantity of cocoa beans or a derivative thereof of said Asian origin according to the invention as described herein, comprising the step of fermenting cocoa beans of said first origin with a microbial composition comprising *Lactobacillus plantarum, Lactobacillus fermentum, Acetobacter pasteurianus, Lactobacillus parafarraginis* and *Saccharomyces cerevisiae.*

In a further aspect, the invention relates to a method for modifying at least three sensory characteristic of bulk quantity of cocoa beans or a derivative thereof of Asian origin as taught herein such as to approximate or converge toward the corresponding sensory characteristic of a bulk quantity of cocoa beans or a derivative thereof as presented in the following Table:

| Sensory characteristic | Absolute score | Relative score |
|---|---|---|
| | (minimum score A = 0) | (minimum score A = 0) |
| | (maximum score B = 7) | (maximum score B = 1) |
| Astringent | 0 | 0 |
| Cocoa | 3 | 0.43 |
| Bitter | 1 | 0.14 |
| Flowery | 0 | 0 |

comprising the step of fermenting cocoa beans of said first origin with a microbial composition comprising:
- *Lactobacillus plantarum*, *Lactobacillus fermentum*, and *Acetobacter pasteurianus*,
- at least one additional *Lactobacillus* species selected from the group consisting of *Lactobacillus parafarraginis*, *Lactobacillus farraginis*, *Lactobacillus diolivorans*, *Lactobacillus faeni* and *Lactobacillus paracasei*, and
- at least one strain of a yeast species of a genus chosen from the group consisting of *Saccharomyces* and *Candida*;

Also described herein is a method for modifying at least one, preferably at least two, more preferably at least three sensory characteristic of bulk quantity of cocoa beans or a derivative thereof of a first origin as taught herein such as to approximate or converge toward the corresponding sensory characteristic of a bulk quantity of cocoa beans or a derivative thereof of a second origin as taught herein, comprising the step of fermenting cocoa beans of said first origin with a microbial composition comprising *Lactobacillus plantarum, Lactobacillus fermentum, Acetobacter pasteurianus, Lactobacillus parafarraginis* and *Saccharomyces cerevisiae*.

Also described herein is a method for reducing astringency in a bulk quantity of cocoa beans or a derivative thereof, comprising the step of fermenting cocoa beans of said first origin with a microbial composition comprising:
- *Lactobacillus plantarum, Lactobacillus fermentum,* and *Acetobacter pasteurianus,*
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida.*

Also described herein is a method for reducing astringency, comprising the step of fermenting cocoa beans with a microbial composition comprising *Lactobacillus plantarum, Lactobacillus fermentum, Acetobacter pasteurianus, Lactobacillus parafarraginis* and *Saccharomyces cerevisiae*.

According to the invention, the cocoa beans or a derivative thereof originate from Asia, preferably South-East Asia, more preferably Malaysia or Indonesia, such as for example Sulawesi.

Said methods may further comprise the step of drying said cocoa beans after said fermenting, and optionally and preferably further comprising the step of roasting said cocoa beans after said drying.

In an embodiment, said derivative in the method according to the invention as described herein is selected from the group comprising cocoa powder, cocoa butter, cocoa nibs, cocoa pulp, cocoa liquor, cocoa extract, cocoa mass, cocoa cake, and chocolate.

The above and additional aspects, preferred embodiments and features of the invention are described in the following sections and in the appended claims. Each aspect, embodiment or feature described herein may be combined with any other aspect(s), embodiment(s) or feature(s) unless clearly indicated to the contrary. In particular, any feature specified herein, and particularly any feature indicated as being preferred or advantageous, may be combined with any other feature(s) specified herein, and particularly with any other feature(s) indicated as being preferred or advantageous. The subject matter of appended claims is hereby specifically incorporated in this specification.

### DESCRIPTION OF FIGURES

**FIG. 1** shows an example of sensory characteristics for cocoa material from different origin.
**FIG. 2** shows an example of sensory characteristics of blends of cocoa material from different origin (95% confidence intervals indicated by dotted curves); (A) carbon, (B) cocoa, (C) sour, (D) bitter.

### DESCRIPTION OF THE INVENTION

Before the present method and products of the invention are described, it is to be understood that this invention is not limited to particular methods, components, products or combinations described, as such methods, components, products and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

The term "about" or "approximately" as used herein when referring to a measurable value such as a parameter, an amount, a temporal duration, and the like, is meant to encompass variations of +/-20% or less, preferably +/-10% or less, more preferably +/-5% or less, and still more preferably +/-1% or less of and from the specified value, insofar such variations are appropriate to perform in the disclosed invention. It is to be understood that the value to which the modifier "about" or "approximately" refers is itself also specifically, and preferably, disclosed.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the following detailed description of the invention, reference is made to the accompanying drawings that form a part hereof, and in which are shown by way of illustration only of specific embodiments in which the invention may be practiced. It is to be understood that other embodiments may be utilized and structural or logical changes may be made without departing from the scope of the present invention. The following detailed description, therefore, is not to be taken in a limiting sense, and the scope of the present invention is defined by the appended claims.

The present invention relates to cocoa beans, in particular fermented cocoa beans, or derivatives thereof. As used herein, the term "cocoa beans" refers to the seeds of plants belonging to the cocoa tree family, in particular *Theobroma cacao.* Cocoa beans together with cocoa pulp constitute the mass of the cocoa fruit or cocoa pod. It is to be understood that all *Theobroma cacao* species, subspecies, varieties, types, subtypes, or clones are included, as well as hybrids thereof. By means of example, and without limitation, the species *Theobroma* cacao comprises the varieties Criollo, Forastero, Trinitario, Arriba, and crosses and hybrids thereof. It is to be understood that the terms "cocoa" and "cacao" are used as having the same meaning, and can be used interchangeably.

Also described herein are cocoa beans, preferably fermented cocoa beans, or a derivative thereof of a first origin and/or of a first chemical or nutritional composition having a sensory characteristic substantially equivalent to the sensory characteristic of cocoa beans, preferably fermented cocoa beans, or a derivative thereof of a second origin and/or a second chemical or nutritional composition.

It is to be understood that sensory characteristics are usually not evaluated on single cocoa beans, due to sensory variation between individual beans. Rather, sensory characteristics are evaluated on (a) sample(s) comprising a multitude of beans, and being representative for the whole population. Likewise, sensory characteristics may be evaluated in a similar fashion for cocoa bean derivatives, such as a sample comprising a multitude of cocoa nibs. Alternatively, sensory characteristics may be evaluated for processed cocoa bean derivatives such as cocoa powder, butter, or liquor. Such cocoa bean derivatives are derived from cocoa beans by grinding cocoa nibs, and therefore advantageously represent homogenous samples.

Also described herein is (a bulk quantity of) cocoa beans, preferably fermented cocoa beans, or a derivative thereof of a first origin having at least one, preferably at least two, more preferably at least three sensory characteristic which is substantially equivalent compared to the corresponding sensory characteristic of (a bulk quantity of) cocoa beans or a derivative thereof of a second origin, wherein said first and said second origin are different.

As used herein, the term "originate" or "origin" refers to the geographical location where the cocoa trees grow or the provenance of the cocoa trees from which the cocoa pods, and hence the cocoa beans, are harvested. The phrase "of an origin" may also encompass bulk quantities of cocoa beans or derivatives thereof which are substantially of said origin, e.g., wherein about 80% (w/w) or more or about 90% (w/w) or more or about 95% (w/w) or more of said bulk is of said origin.

Also described herein is (a bulk quantity of) cocoa beans, preferably fermented cocoa beans, or a derivative thereof having a first chemical composition, and having at least one, preferably at least two, more preferably at least three sensory characteristic which is substantially equivalent compared to the corresponding sensory characteristic of (a bulk quantity of) cocoa beans or a derivative thereof having a second chemical composition, wherein said first and said second chemical composition are different.

As used herein, the term "chemical" or "nutritional" composition relates to the content in the cocoa beans or derivatives thereof of for instance fat, moisture, crude protein, theobromine, caffeine, sugars, starch, total dietary fiber, organic acids, ash, cholesterol, minerals (such as, without limitation, potassium, sodium, calcium, magnesium, phosphorus, chloride, iron, zinc, copper) or vitamins (such as, without limitation, A (retinol), B1 (thiamine), B2 (riboflavin), B3 (niacin), Vitamin B5, C (ascorbic acid), E (tocopherol)). The chemical composition equally relates to for instance fatty acid composition (such as percentages of saturated, monounsaturated or polyunsaturated fatty acids) and type (such as percentages of for instance palmitic (C16:0), stearic (C18:0), arachidic (C20:0), palmitoleic (C16:1), oleic (C18:1), linoleic (C18:2), or other fatty acids). Methods for determining these parameters are well known in the art (see for instance "de Zaan Cocoa & Chocolate Manual", 2009, ADM Cocoa International, Switzerland). It is for example known that cocoa beans originating from South-East Asia, such as Indonesia or Malaysia, generally on average have a lower fat content (a fat content of about 52 wt% in cocoa liquor, for example between 45 and 53 wt%, or between 50 and 53 wt%, or between 50 and 52 wt%) than cocoa beans originating from Africa (a fat content of about 54 wt% in cocoa liquor, for example between 53 and 60 wt%, or between 53 and 57 wt%, or between 54 and 57 wt%), such as Ivory Coast or Ghana.

Also described herein, said cocoa beans or a derivative thereof with said first chemical or nutritional composition do not originate from West-Africa. Also described herein, said cocoa beans or a derivative thereof with said first chemical or nutritional composition originate from Asia, preferably South-East Asia, preferably Malaysia or Indonesia, such as Sulawesi. Also described herein, said cocoa beans or a derivative thereof with said second chemical or nutritional composition originate from West-Africa.

Also described herein is (a bulk quantity of) cocoa beans, preferably fermented cocoa beans, or a derivative thereof of a first origin and/or having a first chemical or nutritional composition, and having a sensory characteristic substantially equivalent to the sensory characteristic of cocoa beans, preferably fermented cocoa beans, of a second origin and/or having a second chemical or nutritional composition, or a derivative thereof, wherein said first and said second origin are different and wherein said first and said second chemical or nutritional composition are different. Also described herein, said cocoa beans, preferably fermented cocoa beans, or a derivative thereof of said first origin are characterised by said first chemical or nutritional composition and said cocoa beans, preferably fermented cocoa beans, of said second origin are characterised by said second chemical or nutritional composition.

As used herein, the term "bulk quantity" refers to a population of cocoa beans, preferably fermented cocoa beans, or a derivative thereof, such as a container, crate, cargo, or ship load. It is to be understood that a bulk quantity of cocoa beans comprises a multitude of cocoa beans. By means of example, and without limitation, a bulk quantity may refer to at least 1, 10, 12, 55, 65, 100, 1000 or more kilogram or ton of cocoa beans. Bulk quantities according to the invention comprise one or more bags of 55 or 65 kg of cocoa beans, coca powder, or other solid cocoa material. An alternative bulk quantity of a cocoa derivative, in particular a liquid or semiliquid cocoa derivative, such as preferably cocoa liquor, comprises one or more container(s) of at least 1 ton (1000 kg) of cocoa liquor, such as containers of at least 10 or 12 ton.

As used herein, the term "derivative" of cocoa beans refers to any product which can be derived from the cocoa bean, preferably from the fermented cocoa bean, or which is prepared from cocoa beans. Cocoa derivatives, as used herein are also called "cocoa-derived materials or products". Cocoa-derived products can be in a liquid form or in a dry or lyophilized form, such as in the form of granules, pellets, or a powder. By means of example, and without limitation, derivatives of cocoa beans include cocoa powder, cocoa butter, cocoa nibs, cocoa pulp, cocoa liquor, cocoa flakes, cocoa extract, cocoa mass, cocoa cake, as well as products comprising one or more of these, such as chocolate. Preferred cocoa bean derivatives are cocoa powder, cocoa liquor, cocoa butter, cocoa nibs and chocolate. The derivatives are preferably derived from fermented cocoa beans. The derivatives referred to herein are well known in the art, and are briefly described below by means of further guidance.

In an embodiment, the invention relates to (a bulk quantity of) cocoa beans, preferably fermented cocoa beans, or a derivative thereof, wherein said derivative is selected from the group comprising or the group consisting of cocoa powder, cocoa butter, cocoa nibs, cocoa pulp, cocoa liquor, cocoa flakes, cocoa extract, cocoa mass, cocoa cake, and chocolate, preferably selected from the group comprising or the group consisting of cocoa powder, cocoa liquor, cocoa butter, cocoa nibs and chocolate.

As used herein, the term "cocoa pulp" or "pulp" refers to the mucilaginous substance embedding to cocoa beans inside the cocoa pod. As used herein, the term "cocoa nib" or "nib" refers to the kernel of the cocoa bean. Nibs are obtained by cracking and de-shelling or winnowing the cocoa beans. As used herein, the term "cocoa liquor" or "liquor" refers to a homogenate of ground nibs. Cocoa liquor is prepared by grinding cocoa nibs into a dark semi-solid paste. On cooling, cocoa liquor yields cocoa mass. When the nibs are ground up into a coarse uniform paste, they form what is known as "cocoa flakes". The term "cocoa flakes" or "flakes" thus refers to cocoa liquor in the form of solid flakes. Cocoa liquor can be processed into two different components: cocoa powder and cocoa butter. The cocoa liquor is pressed into cocoa cake by removing most, preferably substantially all, of the cocoa butter. The term "cocoa cake" or "cake" refers to the cocoa solids remaining after extraction of fat (cocoa butter) by pressing. Cocoa cakes can be broken up and ground into a fine cocoa powder. "Cocoa powder" or "powder" refers to cocoa solids. "Cocoa butter" or "butter" is the fat component of cocoa liquor, whereas the remaining part of the chocolate liquor is cocoa solids.

To produce dark chocolate, cocoa nibs or cocoa liquor/mass are mixed with sugar and sufficient cocoa butter to enable the chocolate to be moulded. To produce milk chocolate, cocoa liquor/mass and cocoa butter are mixed with sugar and milk powder, while for white chocolate cocoa butter (no cocoa liquor/mass) is mixed with sugar and milk powder.

The cocoa beans or derivatives thereof according to the invention as described herein, including the methods and/or microbial compositions, originate from Asia, and do not originate from West-Africa. As used herein, the term "West-Africa" refers to a group of countries in the western most region of Africa. As used herein, "West-Africa" includes, comprises or consists of the following countries: Benin, Burkina Faso, Cameroun, Cape Verde, Ivory Coast, The Gambia, Ghana, Guinea, Guinea-Bissau, Liberia, Mali, Mauritania, Niger, Nigeria, Senegal, Sierra Leone, and Togo, including islands. As used herein, the term "Africa" refers to all countries residing on the African continent, including islands.The cocoa beans or derivatives thereof according to the invention as described herein originate from Asia and do not originate from Ivory Coast, Ghana, Nigeria, Cameroun, Sierra Leone or Tanzania.

The cocoa beans or derivatives thereof according to the invention as described herein, including the methods and/or microbial compositions, do not originate from a geographical region confined within the following latitude and longitude boundaries: 0°N - 25°N and 30°W - 20°E, comprising or roughly coinciding with West-Africa. The cocoa beans or derivatives thereof according to the invention as described herein do not originate from a geographical region confined within the following latitude and longitude boundaries: 40°S - 40°N and 30°W - 60°E, comprising or roughly coinciding with the African continent.

The cocoa beans or derivatives thereof according to the invention as described herein, including the methods and/or microbial compositions, originate from Asia. In a preferred embodiment, the cocoa beans or derivatives thereof according to the invention as described herein originate from South-East Asia. In another embodiment, the cocoa beans or derivatives thereof according to the invention as described herein originate from Indonesia, Malaysia, Sri Lanka, India, Cambodia, Laos, Myanmar, Thailand, Vietnam, Brunei, East Timor, the Philippines, or Singapore. In a preferred embodiment, the cocoa beans or derivatives thereof according to the invention as described herein originate from Indonesia or Malaysia, preferably Indonesia. Even more preferred, the cocoa beans or derivatives thereof according to the invention as described herein originate from Sulawesi.

In a further embodiment, the cocoa beans or derivatives thereof according to the invention as described herein, including the methods and/or microbial compositions, originate from a geographical region confined within the following latitude and longitude boundaries: 15°S - 30°N and 70°E- 160°E, comprising South-East Asia.

In another embodiment, the cocoa beans or derivatives thereof according to the invention as described herein, including the methods and/or microbial compositions, originate from Oceania. In a preferred embodiment, the cocoa beans or derivatives thereof according to the invention as described herein originate from Papua New Guinea or Solomon Islands, preferably Papua New Guinea.

In a further embodiment, the cocoa beans or derivatives thereof according to the invention as described herein, including the methods and/or microbial compositions, originate from a geographical region confined within the following latitude and longitude boundaries: 0°S - 15°S and 140°E - 170°E, comprising Papua New Guinea.

Also described herein, the cocoa beans or derivatives thereof, including the methods and/or microbial compositions, originate from America. Also described herein, the cocoa beans or derivatives thereof originate from Latin America, including islands. Also described herein, the cocoa beans or derivatives thereof originate from Central-America. Also described herein, the cocoa beans or derivatives thereof originate from South-America. Also described herein, the cocoa beans or derivatives thereof originate from Brazil, Ecuador, Colombia, Mexico, Dominican Republic, Peru, or Venezuela, preferably Brazil or Ecuador.

Also described herein, the cocoa beans or derivatives thereof, including the methods and/or microbial compositions, originate from a geographical region confined within the following latitude and longitude boundaries: 30°N - 30°S and 120°W - 40°W, comprising parts of Central and South America.

Also described herein, all cocoa beans or derivatives thereof as disclosed herein originate, irrespective of their country of origin, from a geographical region confined within the following latitude boundaries: 30°N - 30°S, preferably 25°N - 25°S, more preferably 20°N - 20°S, and even more preferably 15°N - 15°S.

As used herein, the term "sensory characteristic" refers to an organoleptic sensation. In a preferred embodiment, said "sensory characteristic" is a "taste characteristic", which can be used interchangeably with "flavour characteristic". Both terms relate to gustation of cocoa beans or derived products therefrom. In general, overall taste is composed of different taste characteristics. By means of example, and without limitation, in the context of cocoa or derived products therefrom, the following sensory characteristics, such as taste characteristics, can be discerned: astringent, bitter, sour, acidity, fruity, flowery, total intensity, aftertaste intensity, aftertaste time, cocoa taste, chocolate taste, aromatic, winey, putrid, carbon, and grilled, as well as off-note flavours including baggy, smoky, mouldy, earthy, raw, hammy, metallic, rancid, burnt and musty. These sensory characteristics are all well known in the art, and the most important ones are briefly described for further guidance.

"Astringent" can be defined as the chemical feeling factor perceived on the tongue and other oral surfaces, described as puckering or drying, elicited with tannins or alum. Astringency is associated with the action of polyphenols. Cocoa material which is astringent may be perceived as less desirable by certain consumer groups.

"Cocoa" can be defined as the basic cocoa note, which is derived from a good fermented, deshelled, roasted, and ground cocoa bean.

"Bitter" can be defined as one of the four basic tastes perceived most sensitively at the back of the tongue, stimulated by solutions of caffeine, quinine, and other alkaloids.

"Acid" or "Sour" can be defined as one of the four basic tastes perceived on the tongue, associated with acids like citric acid.

"Total intensity" can be defined as a full-flavour intensity contrasting with watery. It indicates the "overall" or total flavour intensity of the product.

"Bouquet" is a general term covering all flavour elements over and above the cocoa character, e.g. aromatic, floral, and fruity notes.

Sensory characteristics such as taste characteristics are usually evaluated by means of a taste panel. Taste panels can be consumer taste panels or expert or trained taste panels. Preferably, the taste panel is an expert or trained taste panel, in which all members thereof are familiar with the protocols and taste characteristics, which allows for a more objective evaluation of the taste characteristics. Taste panels are well known in the art. In essence, each member of the taste panel scores one or more taste characteristics, preferably on a numerical scale. Scores typically vary between a minimum score, corresponding to the (substantial) absence of the taste characteristic, and a maximum score, corresponding to a very strong or dominant presence of the taste characteristic. A number of intermediate scores between the minimum and maximum score are typically also presented. It is to be understood that references herein to a comparison of sensory or taste characteristics essentially relate to a comparison of the score of such sensory or taste characteristic.

According to the invention, sensory characteristics, such as taste characteristics of all cocoa-derived material can be evaluated. Accordingly, in an embodiment, sensory characteristics are scored for cocoa-derived material selected from the group comprising or the group consisting of cocoa beans, cocoa powder, cocoa butter, cocoa nibs, cocoa pulp, cocoa liquor, cocoa flakes, cocoa extract, cocoa mass, cocoa cake, and chocolate. In another embodiment, sensory characteristics are scored for unfermented cocoa beans, fermented cocoa beans, fermented and dried cocoa beans, or fermented, dried and roasted cocoa beans. Preferably, sensory characteristics are scored for fermented and dried cocoa beans; fermented, dried and roasted cocoa beans; cocoa nibs, cocoa liquor, cocoa powder or cake; or cocoa butter. As cocoa liquor represents a homogenous cocoa derivative, sensory characteristics may advantageously and preferably be scored for cocoa liquor.

The present invention relates to cocoa beans, preferably fermented cocoa beans, or derivatives thereof, or mixtures or blends thereof, and in particular a bulk quantity, with specific sensory characteristics. In particular, the invention relates to cocoa beans, preferably fermented cocoa beans, or derivatives thereof, or mixtures or blends thereof, and in particular a bulk quantity, characterized by one or more specific sensory or taste characteristic score.

Also described herein are (bulk quantity of) cocoa beans, preferably fermented cocoa beans, or a derivative thereof have at least one sensory characteristic which is equally or substantially equally scored as cocoa beans, preferably fermented cocoa beans, or a derivative thereof of African, preferably West-African, origin.

Also described herein is, the (bulk quantity of) cocoa beans, preferably fermented cocoa beans, or a derivative thereof have at least one sensory characteristic which is equally or substantially equally scored as cocoa beans, preferably fermented cocoa beans, or a derivative thereof with a chemical or nutritional composition (substantially) equivalent to or (substantially) equal to the chemical or nutritional composition of cocoa beans, preferably fermented cocoa beans, or a derivative thereof originating from Africa, preferably West-Africa.

As used herein, the terms "substantially equal(ly)" or "substantially equivalent" preferentially refer to scores which differ by no more than 20%, preferably no more than 15%, more preferably no more than 10%, even more preferably no more than 5%.

Also described herein, the cocoa beans, preferably fermented cocoa beans, or a derivative thereof or mixtures or blends thereof, have one or more sensory characteristic, (each of) which is scored on a scale between a minimum score (A) and a maximum score (B). Preferentially, the minimum score corresponds to the absence or substantial absence of the sensory characteristic, while the maximum score (B) corresponds to the strongest presence of the sensory characteristic. By means of example, and without limitation, Table 1 discloses a scale listing a minimum, several intermediate and a maximum score, which scale may be used to score sensory characteristics.

**Table 1**

| **Score** | **Annotation** |
|---|---|
| 0 (= minimum, or A) | not present |
| 1 | very slightly present |
| 2 | slightly present |
| 3 | moderate |
| 4 | reasonable |
| 5 | present |
| 6 | strongly present |
| 7 (= maximum, or B) | very strongly present |

Also described herein, the cocoa beans, preferably fermented cocoa beans, or a derivative thereof, or mixtures or blends, have one or more sensory characteristic, such as a taste characteristic, (each of) which is scored on a scale between a minimum score (A) and a maximum score (B), wherein the difference between at least 50%, preferably at least 75%, more preferably all of the sensory characteristic scores of the cocoa beans, preferably fermented cocoa beans, or a derivative thereof and the cocoa beans, preferably fermented cocoa beans, or a derivative thereof of a different origin (or is one of the origins, in case of mixtures or blends as described herein) and/or a different chemical or nutritional composition is less than 0.20 times the (absolute) difference between the maximum score and the minimum score (0.20x(B-A)). Also described herein, said difference is between 0 and 0.2x(B-A), 0.19x(B-A), 0.18x(B-A), 0.17x(B-A), 0.16x(B-A), 0.15x(B-A), 0.14x(B-A), 0.13x(B-A), 0.12x(B-A), 0.11x(B-A), 0.1x(B-A), 0.09x(B-A), 0.08x(B-A), 0.07x(B-A), 0.06x(B-A), 0.05x(B-A), 0.04x(B-A), 0.03x(B-A), 0.02x(B-A), or 0.01x(B-A). Also described herein, said difference is equal to or substantially equal to 0.

Also described herein, the cocoa beans, preferably fermented cocoa beans, or a derivative thereof according to the invention as described herein, or mixtures or blends, have one or more sensory characteristic, (each of) which is scored on a scale between a minimum score (A) and a maximum score (B), wherein the difference between at least 25%, preferably at least 33%, more preferably at least 50% of the sensory characteristic scores of the cocoa beans, preferably fermented cocoa beans, or a derivative thereof and the cocoa beans, preferably fermented cocoa beans, or a derivative thereof of a different origin (or is one of the origins, in case of mixtures or blends as described herein) and/or a different chemical or nutritional composition is less than 0.1 times the (absolute) difference between the maximum score and the minimum score (0.1x(B-A)). Also described herein, said difference is between 0 and 0.1x(B-A), 0.09x(B-A), 0.08x(B-A), 0.07x(B-A), 0.06x(B-A), 0.05x(B-A), 0.04x(B-A), 0.03x(B-A), 0.02x(B-A), or 0.01x(B-A). Also described herein, said difference is equal to or substantially equal to 0.

Also described herein, the one or more sensory characteristic is selected from the group comprising or the group consisting of astringent, bitter, sour, acidity, fruity, flowery, total intensity, aftertaste intensity, aftertaste time, cocoa taste, chocolate taste, baggy, smoky, mouldy, earthy, aromatic, winey, putrid, carbon, and grilled. Also described herein, the one or more sensory characteristic is selected from the group comprising or the group consisting of astringent, bitter, sour, fruity, flowery, total intensity, aftertaste intensity, aftertaste time, cocoa taste, and grilled. Also described herein, the one or more sensory characteristic is selected from the group comprising or the group consisting of astringent, bitter, fruity, flowery, total intensity, aftertaste intensity, aftertaste time, and cocoa taste. Also described herein, the one or more sensory characteristic is selected from the group comprising or the group consisting of astringent, bitter, flowery, aftertaste intensity, aftertaste time, and cocoa taste. According to the invention, the three or more sensory characteristic is selected from the group comprising or the group consisting of astringent, bitter, flowery, and cocoa taste.

Also described herein, at least one sensory characteristic (or the score of the sensory characteristic) is compared between the (bulk quantity of) cocoa beans, preferably fermented cocoa beans, or a derivative, or mixtures or blends, as described herein and a reference (bulk quantity of) cocoa beans, preferably fermented cocoa beans, or a derivative thereof, wherein said reference cocoa beans or a derivative thereof is of a different origin (or is one of the origins, in case of mixtures or blends as described herein) and/or chemical or nutritional composition as disclosed herein. Preferably, at least two sensory characteristics are compared, more preferably at least three sensory characteristics, even more preferably at least four sensory characteristics, such as for instance 2, 3, 4, 5, 6, 7, 8, 9, or 10 sensory characteristics. In an embodiment, the cocoa beans, preferably fermented cocoa beans, or a derivative thereof according to the invention as described herein, or mixtures or blends, are non-astringent or substantially non-astringent. In another embodiment, the cocoa beans, preferably fermented cocoa beans, or a derivative thereof according to the invention as described herein, or mixtures or blends, are non-flowery or substantially non-flowery. In a further embodiment, the cocoa beans, preferably fermented cocoa beans, or a derivative thereof according to the invention as described herein, or mixtures or blends, are non-astringent or substantially non-astringent as well as non-flowery or substantially non-flowery. As used in this context, the terms "substantially non-astringent" and "substantially non-flowery" refer to a sensory characteristic score which is lower than 0.20x(B-A), preferably lower than 0.15x(B-A), more preferably lower than 0.1x(B-A), even more preferably lower than 0.05x(B-A).

Also described herein, the cocoa beans, preferably fermented cocoa beans, or a derivative thereof, or mixtures or blends, have one or more sensory characteristic, (each of) which is scored on a relative scale between a minimum score (A=0) and a maximum score (B=1), wherein the difference between at least 50%, preferably at least 75%, more preferably all of the sensory characteristic scores of the cocoa beans, preferably fermented cocoa beans, or a derivative thereof, or mixtures or blends, is less than 0.2 times B (0.20xB) of the corresponding sensory characteristic score as presented in any one of Tables 2 to 6, preferably Tables 3 to 6, more preferably Tables 4 to 6, even more preferably Tables 5 or 6 most preferably Table 6. Also described herein, said difference is between 0 and 0.20xB, 0.19xB, 0.18xB, 0.17xB, 0.16xB, 0.15xB, 0.14xB, 0.13xB, 0.12xB, 0.11xB, 0.1xB, 0.09xB, 0.08xB, 0.07xB, 0.06xB, 0.05xB, 0.04xB, 0.03xB, 0.02xB, or 0.01xB. Also described herein, said difference is equal to or substantially equal to 0.

Also described herein, the cocoa beans, preferably fermented cocoa beans, or a derivative thereof, or mixtures or blends, have one or more sensory characteristic, (each of) which is scored on a relative scale between a minimum score (A=0) and a maximum score (B=1), wherein the difference between at least 25%, preferably at least 33%, more preferably at least 50% of the sensory characteristic scores of the cocoa beans, preferably fermented cocoa beans, or a derivative thereof, or mixtures or blends, is less than 0.1 times B (0.10xB) of the corresponding sensory characteristic score as presented in any one of Tables 2 to 6, preferably Tables 3 to 6, more preferably Tables 4 to 6, even more preferably Tables 5 or 6, most preferably Table 6. Also described herein, said difference is between 0 and 0.10xB, 0.09xB, 0.08xB, 0.07xB, 0.06xB, 0.05xB, 0.04xB, 0.03xB, 0.02xB, or 0.01xB. Also described herein, said difference is equal to or substantially equal to 0.

Also described herein, at least two sensory characteristics are scored and compared, more preferably at least three sensory characteristics, even more preferably at least four sensory characteristics, such as for instance 2, 3, 4, 5, 6, 7, 8, 9, or 10 sensory characteristics, or all respective sensory characteristics as presented in any one of Tables 2 to 6.

**Table 2**

| **Sensory characteristic** | **Absolute score** | **Relative score** |
|---|---|---|
| | **(minimum score A = 0)** | **(minimum score A = 0)** |
| | **(maximum score B = 7)** | **(maximum score B = 1)** |
| Intensity (total) | 3.5 | 0.5 |
| Astringent | 0 | 0 |
| Cocoa | 3 | 0.43 |
| Bitter | 1 | 0.14 |
| Sour | 0.5 | 0.07 |
| Fruity (red sweet fruit) | 1 | 0.14 |
| Flowery | 0 | 0 |
| Grilled | 1 | 0.14 |
| Aftertaste (time) | 3 | 0.43 |
| Aftertaste (intensity) | 2 | 0.29 |

**Table 3**

| **Sensory characteristic** | **Absolute score** | **Relative score** |
|---|---|---|
| | **(minimum score A = 0)** | **(minimum score A = 0)** |
| | **(maximum score B = 7)** | **(maximum score B = 1)** |
| Intensity (total) | 3.5 | 0.5 |
| Astringent | 0 | 0 |
| Cocoa | 3 | 0.43 |
| Bitter | 1 | 0.14 |
| Fruity (red sweet fruit) | 1 | 0.14 |
| Flowery | 0 | 0 |
| Aftertaste (time) | 3 | 0.43 |
| Aftertaste (intensity) | 2 | 0.29 |

**Table 4**

| **Sensory characteristic** | **Absolute score** | **Relative score** |
|---|---|---|
| | **(minimum score A = 0)** | **(minimum score A = 0)** |
| | **(maximum score B = 7)** | **(maximum score B = 1)** |
| Astringent | 0 | 0 |
| Cocoa | 3 | 0.43 |
| Bitter | 1 | 0.14 |
| Flowery | 0 | 0 |
| Aftertaste (time) | 3 | 0.43 |
| Aftertaste (intensity) | 2 | 0.29 |

**Table 5**

| **Sensory characteristic** | **Absolute score** | **Relative score** |
|---|---|---|
| | **(minimum score A = 0)** | **(minimum score A = 0)** |
| | **(maximum score B = 7)** | **(maximum score B = 1)** |
| Astringent | 0 | 0 |
| Cocoa | 3 | 0.43 |
| Bitter | 1 | 0.14 |
| Flowery | 0 | 0 |

**Table 6**

| **Sensory characteristic** | **Absolute score** | **Relative score** |
|---|---|---|
| | **(minimum score A = 0)** | **(minimum score A = 0)** |
| | **(maximum score B = 7)** | **(maximum score B = 1)** |
| Astringent | 0 | 0 |
| Bitter | 1 | 0.14 |
| Flowery | 0 | 0 |

It will be appreciated by the skilled person that sensory characteristics, such as taste characteristics, can be scored according to a variety of scales. In an embodiment of the present invention, sensory characteristics are scored on a scale with a minimum score (A) of 0 and a maximum score (B) of 7, as presented in Table 1. The present invention is however not limited to the sensory characteristic scoring scale as presented in Table 1. Tables 2 to 6 list scores for a variety of sensory characteristics as an absolute score (with a minimum absolute score of 0 and a maximum absolute score of 7) and as a relative score (which score is the difference between the absolute score (X) and the absolute minimum score, which difference is divided by the difference between the absolute maximum score and the absolute minimum score ((X-A)/(B-A)), wherein X represents for instance a measured score on the absolute score scale; and hence the relative score scale has a relative minimum score of 0 and a relative maximum score of 1). The skilled person will acknowledge that a relative score as presented in Tables 2 to 6 allows easy comparison between sensory characteristic scores which are obtained with different scales. By means of example, a score difference of 0.2x(B-A) equals 1.4 on the absolute score scale in any of Tables 2 to 6 (where the maximum score is 7); a score difference of 0.2x(B-A) equals 0.2 on the relative score scale in any of Tables 2 to 6 (where the maximum score is 1).

By means of further example, a score difference of 0.2x(B-A) equals 10 on an absolute score scale with a maximum score of 100 and a minimum score of 50. If such absolute score scale is transformed to a relative score scale as presented herein, a score difference of 0.2x(B-A) on such relative scale equals 0.2x(((B-A)/(B-A))-((A-A)/(B-A))), which equals 0.2. A skilled person will further appreciate that per definition, on the relative score scale as presented herein, A equals 0. Hence, on the relative score scale, for instance 0.2x(B-A) equals 0.2xB. Accordingly, any reference herein to a formula of the type NxB (wherein N represents a cut-off or deviation as described herein, such as 0.2 or 0.1) relates to the relative score scale as described herein (i.e. with a minimum score A of 0 and a maximum score B of 1), or to an absolute score scale wherein A equals 0.

Also described herein, (the bulk quantity of) cocoa beans, preferably fermented cocoa beans, or a derivative thereof, or mixtures or blends, have a composite sensory characteristic deviation which is scored as the average of the difference between the scores of one or more sensory characteristic of said (bulk quantity of) cocoa beans, preferably fermented cocoa beans, or a derivative thereof, and the corresponding sensory characteristics of a reference (bulk quantity of) cocoa beans, preferably fermented cocoa beans, or a derivative thereof, wherein said reference cocoa beans or a derivative thereof is of a different origin (or is one of the origins, in case of mixtures or blends as described herein) and/or chemical or nutritional composition as disclosed herein, wherein said composite sensory characteristic deviation score is less than 0.10x(B-A). Also described herein, said difference is between 0 and 0.10x(B-A), 0.09x(B-A), 0.08x(B-A), 0.07x(B-A), 0.06x(B-A), 0.05x(B-A), 0.04x(B-A), 0.03x(B-A), 0.02x(B-A), or 0.01x(B-A). Also described herein, said difference is equal to or substantially equal to 0. Preferably, at least two sensory characteristics are compared, more preferably at least three sensory characteristics, even more preferably at least four sensory characteristics, such as for instance 2, 3, 4, 5, 6, 7, 8, 9, or 10 sensory characteristics.

According to the invention, the cocoa beans or a derivative thereof as described above are from Asian origin. Also described herein, the reference cocoa beans or a derivative thereof is of West-African origin. Also described herein, the mixtures or blends are mixtures or blends of non-West-African and West-African origin.

In a preferred embodiment, the composite sensory characteristic as described herein comprises or consists of at least one, preferably at least two, more preferably at least three, even more preferably at least four of the sensory characteristics selected from the group comprising or consisting of astringent, bitter, sour, fruity, flowery, total intensity, aftertaste intensity, aftertaste time, cocoa taste and grilled, preferably selected from the group comprising astringent, cocoa taste, bitter and flowery.

Also described herein, (the bulk quantity) of cocoa beans, preferably fermented cocoa beans, or a derivative thereof have a composite sensory characteristic deviation which is scored as the average of the difference between the scores of one or more sensory characteristic of said (bulk quantity of) cocoa beans, preferably fermented cocoa beans, or a derivative thereof, or mixtures or blends, and the corresponding sensory characteristics as presented in any one of Tables 2 to 6, preferably Tables 3 to 6, more preferably Tables 4 to 6, even more preferably Tables 5 or 6, most preferably Table 6, wherein said composite sensory characteristic deviation score is less than 0.10x(B-A). Also described herein, said difference is between 0 and 0.10x(B-A), 0.09x(B-A), 0.08x(B-A), 0.07x(B-A), 0.06x(B-A), 0.05x(B-A), 0.04x(B-A), 0.03x(B-A), 0.02x(B-A), or 0.01x(B-A). Also described herein, said difference is equal to or substantially equal to 0. Preferably, at least two sensory characteristics are scored and compared, more preferably at least three sensory characteristics, even more preferably at least four sensory characteristics, such as for instance 2, 3, 4, 5, 6, 7, 8, 9, or 10 sensory characteristics, or all respective sensory characteristics as presented in any one of Tables 2 to 6. In an aspect, the invention also relates to an edible product comprising the cocoa beans, preferably fermented cocoa beans, and/or at least one derivative, mixture, or blend according to the invention as described herein. In an embodiment, the invention relates to an edible product comprising at least one derivative selected from the group comprising or consisting of cocoa powder, cocoa butter, cocoa nibs, cocoa pulp, cocoa liquor, cocoa extract, cocoa flakes, cocoa mass, cocoa cake, and chocolate. In a preferred embodiment, said derivative, mixture, or blend is selected from the group comprising or consisting of cocoa powder, cocoa butter, cocoa liquor, cocoa extract, and chocolate. As used herein, the term "edible product" refers to a solid or liquid product which is suited for human or animal, preferably human, consumption, such as cakes, pies, biscuits, ice cream, pralines, mousse, cookies, brownies, chocolate milk, etc. As used herein, the term "edible product" refers to an edible cocoa based composition. A preferred edible product or coca based composition is chocolate, such as dark or black chocolate, milk chocolate or white chocolate.

In an embodiment, the invention relates to (a bulk quantity of) cocoa beans according to the invention as described herein which have been fermented. In a further embodiment, the invention relates to (a bulk quantity of) cocoa beans according to the invention as described herein which have been fermented and (subsequently) dried. In yet a further embodiment, the invention relates to (a bulk quantity of) cocoa beans according to the invention as described herein which have been fermented, (subsequently) dried, and (subsequently) roasted.

In another embodiment, the invention also relates to a derivative as described herein of (a bulk quantity of) cocoa beans which have been fermented. In a further embodiment, the invention relates to a derivative as described herein of (a bulk quantity of) cocoa beans which have been fermented and (subsequently) dried. In yet a further embodiment, the invention relates to a derivative as described herein of (a bulk quantity of) cocoa beans which have been fermented, (subsequently) dried, and (subsequently) roasted.

One way of obtaining (the bulk quantity of) cocoa beans, or a derivative thereof according to the invention as disclosed herein involves fermentation of said cocoa beans with a microbial composition comprising at least three *Lactobacillus* species and at least one *Acetobacter* species and at least one yeast species.

Accordingly, in an aspect, the invention relates to a method for obtaining (the bulk quantity of) cocoa beans or a derivative thereof according to the invention as described herein, comprising the step of fermenting cocoa beans with a microbial composition comprising:
- *Lactobacillus plantarum, Lactobacillus fermentum,* and *Acetobacter pasteurianus,*
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida.*

In a further aspect, the invention relates to the use of a microbial composition comprising:
- *Lactobacillus plantarum, Lactobacillus fermentum,* and *Acetobacter pasteurianus,*
- at least one additional Lactobacillus species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida*
for obtaining (the bulk quantity of) cocoa beans or a derivative thereof according to the invention as described herein.

In another aspect, the invention relates to a method for modifying at least three, even more preferably at least four sensory characteristic(s), such as taste characteristic(s), of cocoa beans of Asian origin, comprising the step of fermenting said cocoa beans with a microbial composition comprising:
- *Lactobacillus plantarum, Lactobacillus fermentum,* and *Acetobacter pasteurianus,*
- at least one additional Lactobacillus species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida.*

In yet another aspect, the invention relates to the use of a microbial composition comprising:
- *Lactobacillus plantarum, Lactobacillus fermentum,* and *Acetobacter pasteurianus,*
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida*
for modifying at least three, even more preferably at least four sensory characteristic(s), such as taste characteristic(s) of (a bulk quantity of) cocoa beans or a derivative thereof.

Also described herein is a method for modifying at least one, preferably at least two, more preferably at least three sensory characteristic(s), such as taste characteristic(s), of bulk quantity of cocoa beans or a derivative thereof of a first origin as taught herein such as to approximate or converge toward the corresponding sensory characteristic of a bulk quantity of cocoa beans or a derivative thereof of a second origin as taught herein, comprising the step of fermenting cocoa beans of said first origin with a microbial composition comprising:
- *Lactobacillus plantarum, Lactobacillus fermentum,* and *Acetobacter pasteurianus,*
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida*;
wherein said first and said second origin are different.

Also described herein is the use of a microbial composition comprising:
- *Lactobacillus plantarum, Lactobacillus fermentum,* and *Acetobacter pasteurianus,*
- at least one additional Lactobacillus species selected from the group consisting of *Lactobacillus parafarraginis, Lactobacillus farraginis, Lactobacillus diolivorans, Lactobacillus faeni* and *Lactobacillus paracasei,* and
- at least one strain of a yeast species of a genus chosen from the group consisting of *Saccharomyces* and *Candida*
for modifying at least one, preferably at least two, more preferably at least three sensory characteristic of bulk quantity of cocoa beans or a derivative thereof of a first origin as taught herein such as to approximate or converge toward the corresponding sensory characteristic of a bulk quantity of cocoa beans or a derivative thereof of a second origin as taught herein.

Preferably, said first origin is Asian origin, preferably South-East Asian, preferably Malaysian or Indonesian, such as Sulawesian. Preferably, said second origin is West-African.

As used herein, the terms "to approximate" and "converge toward" refer to a small difference in sensory characteristic score between cocoa beans, preferably fermented cocoa beans, or derivatives thereof of a different origin or a different chemical or nutritional composition as defined herein. These terms also relate to mimicking or closely matching the one or more sensory characteristics of one type of cocoa beans or derivative by another type. The terms for instance refer to a difference less than 0.2x(B-A) for at least 50%, preferably at least 75%, more preferably at least 90%, most preferably all sensory characteristics of said cocoa beans, preferably fermented cocoa beans, or derivative.

In an embodiment, the derivative according to the methods or uses as described herein are selected from the group comprising or the group consisting of cocoa powder, cocoa butter, cocoa nibs, cocoa pulp, cocoa liquor, cocoa flakes, cocoa extract, cocoa mass, cocoa cake, and chocolate, preferably selected from the group comprising or the group consisting of cocoa powder, cocoa liquor, cocoa butter, cocoa nibs and chocolate.

In an embodiment, the methods as disclosed herein further comprise the step of drying said cocoa beans, preferably fermented cocoa beans. Preferably said cocoa beans are dried subsequently to the fermentation. In a further embodiment, the method further comprises the step of drying and roasting said cocoa beans, preferably fermented cocoa beans. Preferably said cocoa beans are dried subsequently to the fermentation, and said cocoa beans are roasted subsequently to said drying. Alternatively, said roasting can be performed after obtaining cocoa nibs from the cocoa beans. In a further embodiment, the methods as disclosed herein further comprise the step of packaging and/or shipping said cocoa beans or said derivative thereof, preferably after the steps of drying and/or roasting.

Also described herein, at least 1, 2, 3, 4, 5, 6, 7, 8, 9, or 10 sensory characteristics selected from the group comprising or consisting of astringent, bitter, flowery, aftertaste intensity, aftertaste time, and cocoa taste are modulated by the method as described herein. Also described herein, the sensory characteristic is selected from the group comprising or the group consisting of astringent, bitter, flowery, and cocoa tasteAlso described herein, the sensory characteristic is selected from at least 1, 2, 3, 4, 5, 6, 7, 8, 9, or 10 sensory characteristics, or all sensory characteristics as presented in any of Tables 2 to 11, preferably Tables 3 to 6 or Tables 8 to 11, more preferably Tables 4 to 6 or Tables 9 to 11, even more preferably Tables 5, 6, 10, or 11, most preferably Tables 6 or 11.

As used herein, the term "modifying" refers to an alteration of the sensory characteristic. In particular, the term "modifying" refers to an alteration of the sensory characteristic score as obtained by a taste panel. Preferably, the sensory characteristic is modified by at least 0.01x(B-A), 0.02x(B-A), 0.03x(B-A), 0.04x(B-A), 0.05x(B-A), 0.06x(B-A), 0.07x(B-A), 0.08x(B-A), 0.09x(B-A), 0.1x(B-A) or more. More preferably, the sensory characteristic is modified by at least 0.05x(B-A), 0.1x(B-A), 0.15x(B-A), 0.2x(B-A) or more. The term modifying, as used herein relates to a modification which can be in either one direction (i.e. up or down), such as a sensory characteristic score which increases or a sensory characteristic score which decreases. In this context, "modifying to" or "modifying towards" relates to a modification in a specific direction, such as a modification towards a sensory characteristic score or cocoa material of a different origin or chemical/nutritional composition.

In an embodiment, each of the sensory characteristics is modified by at least 0.05x(B-A), 0.1x(B-A), 0.15x(B-A), 0.2x(B-A) or more, preferably 0.1x(B-A) or more. In another embodiment, at least half, preferably at least 50%, 60%, 70%, 80%, 90%, or all of the sensory characteristics is modified by at least 0.2x(B-A) or more. In a further embodiment, the composite sensory characteristic deviation as described herein is at least 0.1x(B-A). It is to be understood that sensory characteristics in the methods as disclosed herein are compared between cocoa beans, preferably fermented cocoa beans, or a derivative thereof which have been fermented with the microbial compositions as described herein, and cocoa beans, preferably fermented cocoa beans, or a derivative thereof which have not been fermented with the microbial compositions as described herein.

Also described herein is a method for reducing astringency of (a bulk quantity of) cocoa beans or a derivative thereof, comprising the step of fermenting cocoa beans and/or pulp with the microbial compositions as described hereinAlso described herein is a method for reducing astringency of (a bulk quantity of) cocoa beans or a derivative thereof, comprising the step of fermenting cocoa beans and/or pulp with the microbial compositions as described herein, wherein the cocoa beans or a derivative thereof does not originate from West-Africa. Also described herein is a method for reducing astringency of (a bulk quantity of) cocoa beans or a derivative thereof, comprising the step of fermenting cocoa beans and/or pulp with the microbial compositions as described herein, wherein the cocoa beans or a derivative thereof originates from Asia, preferably South-East Asia, more preferably from Indonesia, such as Sulawesi.

As used herein, the term "reducing astringency" refers preferably to a reduction of at least 10%, such as 10%, 20%, 30%, 40%, 50%, 60%, 70%, 80%, 90%, or 100%. More preferably, the reduction is at least 25%, even more preferably at least 50%, yet more preferably at least 75%, most preferably at least 90%, such as 90%, 91%, 92%, 93%, 94%, 95%, 96%, 97%, 98%, 99%, or 100% or substantially 100%.

A preferred microbial composition in the methods as described herein comprises, consists essentially of or consists of *Lactobacillus plantarum, Lactobacillus fermentum, Acetobacter pasteurianus, Lactobacillus parafarraginis* and *Saccharomyces cerevisiae.*

The cocoa beans are embedded in a mucilaginous pulp inside the pods. After the pods are harvested, the cocoa beans (usually including at least a portion of the surrounding pulp) are recovered from the pods. Accordingly, the plant material used in the method as described herein may preferably comprise cocoa beans derived from the fruit pods of *Theobroma cacao,* and may further comprise the pulp derived from the said fruit pods. In an embodiment, the plant material may consist essentially of cocoa beans and the pulp derived from the fruit pods of *Theobroma cacao.*

The term "microbial composition" as used herein refers to a composition of micro-organisms as defined herein, which are added to the organic material, in particular cocoa plant material, preferably at the start of the fermentation process thereof.

As used herein, the term "strain" refers in general to a closed population of organisms of the same species. Accordingly, the term "strain of lactic acid bacteria and/or acetic acid bacteria" generally refers to a strain of a species of lactic acid bacteria and/or acetic acid bacteria. More particularly, the term "strain" refers to members of a microbial species, wherein such members have different genotypes and/or phenotypes. Herein, the term "genotype" encompasses both the genomic and the recombinant DNA content of a microorganism. Herein, the term "phenotype" refers to observable physical characteristics dependent upon the genetic constitution of a microorganism. As one skilled in the art would recognize, microbial strains are thus composed of individual microbial cells having a common genotype and/or phenotype. Further, individual microbial cells may have specific characteristics (e.g., a specific rep-PCR pattern) which may identify them as belonging to their particular strain.

A microbial strain may comprise one or more isolates of a microorganism. As used herein, the term "isolate" refers to cultured microorganisms grown from a single colony taken from a primary isolation plate. An isolate is presumed to be derived from a single microorganism.

As used herein, the terms "microorganism" or "microbial" cover any generally unicellular organism, which can be propagated and manipulated in a laboratory. In the present invention, the terms preferably relate to bacteria and/or yeast and/or fungi. In the present invention, the term microorganism typically denotes a live microorganism, i.e., capable of propagation and/or having metabolic activity.

The term "organic material" as used herein refers to living organisms or their remains and in particular relates to plant material. The term "plant material" includes anything that is or was live vegetation, in particular plants and any parts thereof, the latter including but not restricted to leafs, flowers, roots, seeds, stems, fruits, pods, beans, berries, grains, pulp and the like.

As used herein, the term "fermentation" refers generally to any activity or process involving enzymatic decomposition (digestion) of organic materials by microorganisms. The term "fermentation" encompasses both anaerobic and aerobic processes, as well as processes involving a combination or succession of one or more anaerobic and/or aerobic stages. In the present invention, fermentation preferably involves the decomposition (digestion) of plant material as defined above. In a particular embodiment, the invention provides for the incubation of a microbial composition according to the invention with cocoa material as defined herein at ambient temperature, which may for instance vary between 20 and 40°C. In yet another particular embodiment, the invention provides for the incubation of a microbial composition according to the invention with cocoa material as defined herein for between one and seven days, such as one day, two days, three days, four days, five days, six days or seven days.

Embodiments of microbial compositions for use in accordance with the present invention will now be described in more detail.

Particularly a microbial composition for use in the methods as described herein may comprise, consist essentially of or consist of:
- *Lactobacillus plantarum, Lactobacillus fermentum* and *Acetobacter pasteurianus* and
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* preferably *Lactobacillus parafarraginis,* and
- at least one strain of a yeast species of a genus chosen from the group consisting of *Saccharomyces* and *Candida,* preferably *Saccharomyces,* more preferably wherein said yeast species is *Saccharomyces cerevisiae.*

Other bacteria that may be added to microbial compositions according to the invention include but are not limited to *Lactobacillus buchneri, Lactobacillus fabifermentans, Lactobacillus cacaonum,* and *Lactobacillus hilgardii.*

The present invention also relates to a microbial composition comprising, consisting essentially of or consisting of:
- *Lactobacillus plantarum, Lactobacillus fermentum* and *Acetobacter pasteurianus* and
- at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* preferably *Lactobacillus parafarraginis,* and
- at least one strain of a yeast species of a genus of *Saccharomyces* and *Candida,* preferably *Saccharomyces,* more preferably wherein said yeast species is *Saccharomyces cerevisiae.*

Other bacteria that may be added to microbial compositions according to the invention include but are not limited to *Lactobacillus buchneri, Lactobacillus fabifermentans, Lactobacillus cacaonum,* and *Lactobacillus hilgardii.*

A preferred microbial composition comprises, consists essentially of or consists of *Lactobacillus plantarum, Lactobacillus fermentum, Acetobacter pasteurianus, Lactobacillus parafarraginis* and *Saccharomyces cerevisiae.*

Also described herein are the microbial compositions as described herein, for use in modifying at least one, preferably at least two, at least three, at least four or more sensory characteristics of cocoa beans or derivatives thereof, preferably selected from the group comprising or consisting of astringent, bitter, sour, acidity, fruity, flowery, total intensity, aftertaste intensity, aftertaste time, cocoa taste, chocolate taste, baggy, smoky, mouldy, earthy, aromatic, winey, and grilled, preferably selected from the group comprising astringent, cocoa taste, bitter and fruity, or comprising or consisting of the sensory characteristics as presented in any of Tables 2 to 11. Also described herein are the microbial compositions as described herein, for use in reducing astringency in cocoa beans or a derivative thereof. Preferably, the cocoa beans or a derivative thereof do not originate from West-Africa. Preferably, the cocoa beans or a derivative thereof originate from Asia, preferably South-East Asia, preferably Malaysia or Indonesia, such as Sulawesi.

As indicated above, the microbial composition comprises at least one yeast strain. As used herein, the term "yeast" refers to a group of single-celled fungi, most of which are in the class *Ascomycetes,* and others in the class *Basidiomycetes.*

In an embodiment, the at least one strain of yeast belongs to a species of the genera *Saccharomyces* and *Candida.*

In a preferred embodiment, the at least one strain of yeast belongs to a species chosen from the group comprising or consisting of *Candida bombi, Candida pelliculosa, Candida rugopelliculosa, Candida rugosa, Candida intermedia, Candida krusei, Candida parapsilosis, Candida quercitrusa, Candida silvicola, Candida stellimalicola, Candida boidinii, Candida cacoai, Candida guilliermondii, Candida reukaufii, Candida amapae, Candida diddensiae, Candida friedrichii, Candida humicola, Candida mycoderma, Candida neodendra, Candida tammaniensis*, *Candida tropicalis, Candida valida, Candida zemplinina, Saccharomyces cerevisiae*, and *Saccharomyces cerevisiae* var. *chevalieri*, and preferably *Candida bombi*, *Candida pelliculosa, Candida rugosa, Candida intermedia, Candida krusei, Candida cacoai, Candida guilliermondii*, and *Saccharomyces cerevisiae,* and more preferably *Saccharomyces cerevisiae.*

In another embodiment, the present microbial composition further comprises at least one other yeast strain, different from a species of a genus chosen from the group consisting of *Saccharomyces* and *Candida* as indicated above. For example, in an embodiment, such at least one other strain of yeast may belong to a species of a genus chosen from the group comprising or consisting of *Brettanomyces*, *Cryptococcus*, *Debaryomyces*, *Geotrichum*, *Hanseniaspora*, *Hansenula*, *Issatchenkia*, *Kloeckera*, *Kluyveromyces*, *Lodderomyces*, *Pichia*, *Rhodotorula*, *Saccharomycopsis*, *Schizosaccharomyces*, *Scytaladium*, *Torulaspora*, *Torulopsis* or *Trichosporon, and preferably Cryptococcus*, *Hanseniaspora*, *Hansenula*, *Kluyveromyces*, or *Pichia*, and more preferably *Hanseniaspora*, *Kluyveromyces*, or *Pichia.* Further examples of yeast genera may include but are not limited to *Arxiozyma*, *Citeromyces*, *Dekkera*, *Holleya*, *Kodameae*, *Saturnispora*, *Starmera*, *Tetrapisispora*, *Williopsis* or *Zygosaccharomyces.*

In another embodiment, the present microbial composition consists essentially of *L. fermentum, L. plantarum, L. parafarraginis, L. farraginis, L. diolivorans, L. faeni, L. paracasei, L. casei, L. hilgardii, L. buchneri, Acetobacter pasteurianus, and Saccharomyces cerevisiae.*

In another embodiment, the present microbial composition consists essentially of *L. fermentum, L. plantarum, L. parafarraginis, L. casei, L. buchneri, Acetobacter pasteurianus, and Saccharomyces cerevisiae (Microbial composition A).* In another embodiment, the present microbial composition consists essentially of *L. fermentum, L. plantarum, L. farraginis, L. hilgardii, Acetobacter pasteurianus and Saccharomyces cerevisiae (Microbial composition B)*. In another embodiment, the present microbial composition consists essentially of *L. fermentum, L. plantarum, L. diolivorans, L. hilgardii, Acetobacter pasteurianus and Saccharomyces cerevisiae (Microbial composition C).* In another embodiment, the present microbial composition consists essentially of *L. fermentum, L. plantarum, L. faeni, L. casei, L. buchneri, Acetobacter pasteurianus and Saccharomyces cerevisiae (Microbial composition D).* In another embodiment, the present microbial composition consists essentially of *L. fermentum, L. plantarum, L. paracasei, L. casei, Acetobacter pasteurianus and Saccharomyces cerevisiae (Microbial composition E).* In another embodiment, the present microbial composition consists essentially of *L. fermentum, L. plantarum, L. parafarraginis, L. farraginis, L. hilgardii, Acetobacter pasteurianus and Saccharomyces cerevisiae (Microbial composition F).* In another embodiment, the present microbial composition consists essentially of *L. fermentum, L. plantarum, L. farraginis, L. diolivorans, L. casei, L. hilgardii, L. buchneri, Acetobacter pasteurianus and Saccharomyces cerevisiae (Microbial composition G).* In another embodiment, the present microbial composition consists essentially of *L. fermentum, L. plantarum, L. diolivorans, L. faeni, Acetobacter pasteurianus and Saccharomyces cerevisiae (Microbial composition H).* In another embodiment, the present microbial composition consists essentially of *L. fermentum, L. plantarum, L. faeni, L. paracasei, L. hilgardii, Acetobacter pasteurianus and Saccharomyces cerevisiae (Microbial composition I).* In another embodiment, the present microbial composition consists essentially of *L. fermentum, L. plantarum, L. parafarraginis, L. diolivorans, L. casei, L. hilgardii, L. buchneri, Acetobacter pasteurianus and Saccharomyces cerevisiae (Microbial composition J).* In another embodiment, the present microbial composition consists essentially of *L. fermentum, L. plantarum, L. farraginis, L. faeni, L. casei, Acetobacter pasteurianus and Saccharomyces cerevisiae (Microbial composition K).* In another embodiment, the present microbial composition consists essentially of *L. fermentum, L. plantarum, L. diolivorans, L. paracasei, L. hilgardii, Acetobacter pasteurianus, and Saccharomyces cerevisiae (Microbial composition L).* In another embodiment, the present microbial composition consists essentially of *L. fermentum, L. plantarum, L. parafarraginis, L. diolivorans, L. paracasei, L. buchneri, Acetobacter pasteurianus, Saccharomyces cerevisiae (Microbial composition M).* In another embodiment, the present microbial composition consists essentially of *L. fermentum, L. plantarum, L. parafarraginis, L. farraginis, L. diolivorans, L. faeni, L. paracasei, L. casei, L. hilgardii, L. buchneri, Acetobacter pasteurianus and Saccharomyces cerevisiae (Microbial composition N).* In another embodiment, the present microbial composition consists essentially of *L. fermentum, L. plantarum, L. parafarraginis, Acetobacter pasteurianus and Saccharomyces cerevisiae (Microbial composition O).*

Table 12 provides further non-limitative examples of microbial compositions which are suitable for use in the methods as described herein.

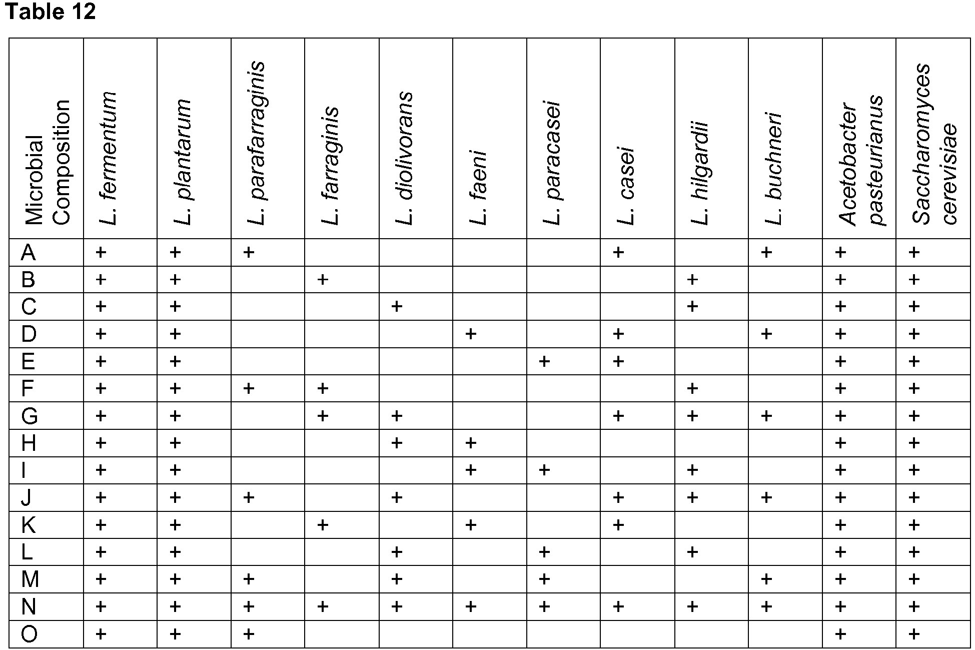

The fermentation of the plant material comprising beans derived from *Theobroma cacao* and/or plant material consisting, preferably essentially, of the beans and pulp derived from *Theobroma* cacao (collectively "cocoa beans and pulp") may be carried out in heaps, boxes (e.g., wooden or steel boxes), baskets, trays, and other means, such as generally used in the art. In a preferred embodiment, the said fermentation may be carried out in heaps or boxes.

In another embodiment, the invention relates to the use of a microbial composition as defined above at early stages of a fermentation process, during the first 1, 2, 3, 4, 5, 7, 10, 12, 15, 18, 20, 22 or 24 hours of the fermentation. In an another embodiment, the invention therefore provides a method for regulating fermentation of organic material, more particularly plant material, even more particularly cocoa beans and pulp, comprises adding thereto a composition as defined above at the start and/or earlier stages of the fermentation, e.g., at the start and/or during the first 24 hours of the fermentation, and for instance during the first 1, 2, 3, 4, 5, 7, 10, 12, 15, 18, 20 or 22 hours of the fermentation, a composition as defined herein.

In an embodiment, microbial compositions as described herein may be a starter culture. The term "culture" refers to any sample or specimen which is known to contain or suspected of containing one or more microorganisms. The term as used herein also encompasses starter culture and co-culture. The term "starter culture" refers to a composition comprising live microorganisms that are capable of initiating or effecting fermentation of organic material, optionally after being cultivated in a separate starter medium for obtaining a high density culture. Accordingly, in an embodiment, microbial compositions of the invention may be a high density culture obtained by propagating a starter culture in a suitable medium.

A starter culture may be, e.g., a liquid culture, liquid pressed culture, frozen or dried form, including, e.g., freeze dried form and spray/fluid bed dried form, or frozen or freeze-dried concentrated. The culture may be packed in vacuum, or under an atmosphere of, e.g., N₂, CO₂ and the like. For example, a starter culture may be produced and distributed in sealed enclosures, preferably non-pyrogenic, which can be made of a rigid, non-flexible or flexible suitable plastic or other material, to the fermentation place and may be either added to organic material to be fermented, or optionally first cultivated in a separate starter medium to obtain a high density culture.

A starter culture may also contain, in addition to the microorganisms, buffering agents and growth stimulating nutrients (e.g., an assimilable carbohydrate or a nitrogen source), or preservatives (e.g., cryoprotective compounds) or other carriers, if desired, such as milk powder or sugars.

It may be preferred that a starter culture or a high density culture contains at least 10² colony forming units (CFU) of bacterial strains and optionally of one or more yeast strains of the invention, such as at least 10³ CFU/g, at least 10⁴ CFU/g, e.g., at least 10⁵ CFU/g, at least 10⁶ CFU/g, e.g., at least 10⁷ CFU/g, at least 10⁸ CFU/g, e.g., at least 10⁹ CFU/g, at least 10¹⁰ CFU/g, e.g., at least 10¹¹ CFU/g, at least 10¹² CFU/g, or at least 10¹³ CFU/g.

In an embodiment, a microbial composition as defined herein may be a starter culture or a high density culture, comprising at least 10² CFU (colony forming units) of bacterial strains per g plant material, and for instance at least 10³ CFU/g, at least 10⁴ CFU/g, e.g., at least 10⁵ CFU/g, at least 10⁶ CFU/g, e.g., at least 10⁷ CFU/g, at least 10⁸ CFU/g, e.g., at least 10⁹ CFU/g, at least 10¹⁰ CFU/g, e.g., at least 10¹¹ CFU/g, at least 10¹² CFU/g, or at least 10¹³ CFU/g of the organic material.

Without limitation, a preferred microbial composition as described herein may comprise, consist essentially of or consist of:
- between 10³ and 10⁷ CFU/g of the plant material, preferably between 10⁴ and 10⁶, more preferably between 10⁴ and 10⁵, such as very preferably between 5x10⁴ and 5x10⁵ CFU/g of the plant material *Lactobacillus plantarum;*
- between 10³ and 10⁷ CFU/g of the plant material, preferably between 10⁴ and 10⁶, more preferably between 10⁴ and 10⁵, such as very preferably between 5x10⁴ and 5x10⁵ CFU/g of the plant material *Lactobacillus fermentum;*
- between 10³ and 10⁷ CFU/g of the plant material, preferably between 10⁴ and 10⁶, more preferably between 10⁴ and 10⁵, such as very preferably between 5x10⁴ and 5x10⁵ CFU/g of the plant material *Acetobacter pasteurianus;*
- between 10³ and 10⁷ CFU/g of the plant material, preferably between 10⁴ and 10⁶, more preferably between 10⁴ and 10⁵, such as very preferably between 5x10⁴ and 5x10⁵ CFU/g of the plant material of at least one additional *Lactobacillus* species selected from the group consisting of *Lactobacillus parafarraginis, Lactobacillus farraginis, Lactobacillus diolivorans, Lactobacillus faeni* and *Lactobacillus paracasei,* preferably *Lactobacillus parafarraginis,* and
- between 10³ and 10⁷ CFU/g of the plant material, preferably between 10⁴ and 10⁶, more preferably between 10⁴ and 10⁵, such as very preferably between 5x10⁴ and 5x10⁵ CFU/g of the plant material of at least one strain of a yeast species of a genus chosen from the group consisting of *Saccharomyces* and *Candida,* preferably *Saccharomyces,* more preferably wherein said yeast species is *Saccharomyces cerevisiae.*

The invention also relates to the cocoa beans and/or derivatives thereof which are obtained or which are obtainable by the methods as described herein, as well as edible products comprising one or more such cocoa beans and/or derivatives.

In particular, the present invention also relates to cocoa beans, preferably fermented cocoa beans, and/or derivatives thereof of Asian origin, preferably South-East Asian origin, more preferably originating from Indonesia, Malaysia, Sri Lanka, India, Cambodia, Laos, Myanmar, Thailand, Vietnam, Brunei, East Timor, the Philippines, or Singapore, even more preferably originating from Indonesia or Malaysia, most preferably originating from Sulawesi, which are obtained by or obtainable by the fermentation methods as described herein.

Also described herein are cocoa beans, preferably fermented cocoa beans, and/or derivatives thereof not originating from Ghana or Ivory Coast, more preferably not originating from West-Africa, such as preferably not originating from Benin, Burkina Faso, Cameroun, Cape Verde, Ivory Coast, The Gambia, Ghana, Guinea, Guinea-Bissau, Liberia, Mali, Mauritania, Niger, Nigeria, Senegal, Sierra Leone, and Togo, including islands, which are obtained by or obtainable by the fermentation methods as described herein.

Also described herein, cocoa beans, in particular fermented cocoa beans, or derivatives thereof from different origins can be obtained to converge toward each other in respect of overall as well as specific sensory characteristics, such as taste characteristics, or taste altogether, advantageously, mixtures of such beans can be composed or derivatives thereof can be blended, without major deviations of such mixtures or blends in overall as well as specific sensory characteristics, such as taste characteristics, or taste altogether. Also described herein is a mixture or blend of (a bulk quantity of) cocoa beans, preferably fermented cocoa beans, or mixture or blend of one or more derivative thereof of different origins, wherein one or more sensory characteristic as described herein of a first origin approximates or converges toward the corresponding sensory characteristic of a second origin. In a particular preferred embodiment, the invention relates to a mixture or blend of (a bulk quantity of) cocoa beans, preferably fermented cocoa beans, or one or more derivative thereof of Asian origin, as described herein elsewhere, and possibly obtained by any of the methods as described herein, with (a bulk quantity of) cocoa beans, preferably fermented cocoa beans, or one or more derivative thereof of West-African origin, as described herein elsewhere. Preferably the Asian origin is South-East Asian, more preferably Indonesian or Malaysian, most preferably Sulawesian. Preferably, the West-African origin is from Ghana or Ivory Coast.

Also described herein is (a bulk quantity of) cocoa beans, preferably fermented cocoa beans, or mixture or blend of one or more derivative thereof of different origins, having at least one, preferably at least two, more preferably at least three sensory characteristic(s) as described herein, such as any or all of the sensory characteristics as defined in Tables 2-11, which is (are) substantially equivalent compared to the corresponding sensory characteristic(s) of (a bulk quantity of) cocoa beans, preferably fermented cocoa beans, or a derivative thereof of one of the origins. Also described herein is a mixture or blend of (a bulk quantity of) cocoa beans, preferably fermented cocoa beans, or one or more derivative thereof of Asian origin, as described herein elsewhere, and possibly obtained by any of the methods as described herein, with (a bulk quantity of) cocoa beans, preferably fermented cocoa beans, or one or more derivative thereof of West-African origin, as described herein elsewhere, wherein at least one, preferably at least two, more preferably at least three sensory characteristic(s) of said blend or mixture, preferably any or all of the sensory characteristics as defined in Tables 2-11, is (are) substantially equivalent compared to the corresponding sensory characteristic(s) of (a bulk quantity) of cocoa beans, preferably fermented cocoa beans, or a derivative thereof of a West-African origin. Preferably the Asian origin is South-East Asian, more preferably Indonesian or Malaysian, most preferably Sulawesian. Preferably, the West-African origin is from Ghana or Ivory Coast.

The mixtures or blends as described throughout this specification may comprise between 0 and 100% w/w of cocoa derived material as described herein of said first origin and between 100 and 0% w/w of cocoa derived material as described herein of said second origin, such as for instance about 5, 10, 20, 30, 40, 50, 60, 70, 80, 90, or 95% w/w of cocoa derived material of said first origin and about 95, 90, 80, 70, 60, 50, 40, 30, 20, 10, or 5% w/w of cocoa derived material of said second origin.

Preferred fermentation methods and microbial compositions for use in the fermentation methods, as well as methods for processing of cocoa beans or derivatives thereof are disclosed in PCT/EP2010/061043, which is herby incorporated in its entirety by reference.

### EXAMPLES

### Example 1 Taste panels

The test objective is to obtain a quantitative description of individual attributes of a particular sample or samples. In general, 6 to 12 presentations of each of the samples are required. All taste panel members should be familiar with the test format, the meaning of the scale and the attributes that are used to make a description of the samples.

The samples should be well tempered or liquid, there may be no difference in colour or texture between the samples. The samples should be appetizing and well presented. Control of lighting may be necessary to reduce any colour variables.

The profiling technique method is a descriptive analysis of products. For this test the hedonic judgement is not recommended and the evaluation of the products is monadic (no direct comparison between samples).

### Pre-requisites :

- Always try to work with a reference. This reference already has values for certain criteria.
- Compare the test sample with the reference and then give higher/lower values.
- The reference is blindfold repeated between the samples.

A 0 to 7 point structured scale was used with an anchor point as described below. This scale allows better management of the reference product.
0 : not present (absent)
7 : very strongly present

A Quantitative Descriptive Analysis (QDA) type method was used in order to asses the flavour and after-taste profile of the samples. The QDA principle is that each judge must describe qualitatively and quantitatively what he perceives, using a ratio scale. Judges must be instructed to score the test product x times bigger than the score of the reference if perceived intensity of the test product is x times bigger than the perceived intensity of the reference product. The position of the reference score is critical to allow the use of the whole range of available numbers.

During a profile test the reference product and its profile was presented to the panellist first. Secondly, the test samples were examined. Between the test samples the reference was repeated blindfold. Panel members should be able to recognise the reference. There may be no deviation in points for each of the criteria (max. 30%). If the panellist did give points to the repeated reference with a deviation, 30% of his results are not representative and may not be counted into the final result.

The mean for each sample was calculated. The results were evaluated with a ANOVA to determine whether differences between means or among samples exist or not. If the difference exists, multiple comparison tests must be used to establish which samples differ significantly.
If p < 0.05 we state that there is a difference between the samples.
If p > 0.05 < 0.1 we state that there is doubt.
If p > 0.1 we state that there is no difference between the samples.

### Example 2 Comparison of samples

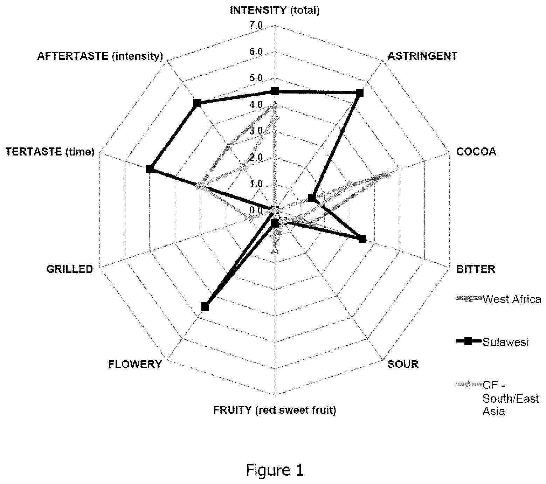

Cocoa liquor of different origin was evaluated in a taste panel as described in Example 1. The results of the taste panel for the following taste characteristics, total intensity, astringent, cocoa, bitter, sour, fruity, flowery, grilled, aftertaste time, and aftertaste intensity is presented in Figure 1.

Cocoa liquor obtained from cocoa beans originating from West-Africa (Ivory Coast) were compared to cocoa liquor obtained from cocoa beans originating from South-East Asia (Indonesia - Sulawesi) and to cocoa liquor obtained from cocoa beans originating from South-East Asia (Indonesia - Sulawesi) which were fermented with a microbial composition comprising *Lactobacillus plantarum, Lactobacillus fermentum, Acetobacter pasteurianus, Lactobacillus parafarraginis* and *Saccharomyces cerevisiae.* About 100 kg of unfermented cocoa beans were mixed with a microbial composition (for example 100 ml) in boxes and after about 2 days, turned and allowed to ferment for about another 2 days. The amount of inoculum (CFU/g beans) was about 10⁶/g beans. The beans were then dried (e.g. by sun drying). Then the dried beans were roasted at about 120°C for about 30 min. Cocoa liquor was subsequently prepared from the cocoa nibs.

During the fermentation pH and temperature were followed up online, and dried fermented beans were recovered after about 4 days. pH and temperatures can be measured by using a digital sensor (e.g. pH 340i sensor, WTW Gmbl, Weilheim, Germany) that was placed in the middle of the fermenting biomass in the boxes.

Figure 1 shows a specific taste characteristic profile for each of the compared cocoa liquors. Minimum taste characteristic score is 0, and maximum taste characteristic score is 7. Intermediate taste characteristic scores are as presented in Table 1. From Figure 1, it is apparent that the taste characteristic profile of cocoa liquor obtained from cocoa beans originating from West-Africa substantially surprisingly and completely unexpectedly mimics the taste characteristic profile of cocoa liquor obtained from cocoa beans originating from South-East Asia which were fermented with the indicated microbial composition.

Alternatively, cocoa liquor obtained from cocoa beans originating from West-Africa (Ivory Coast) is compared to cocoa liquor obtained from cocoa beans originating from South-East Asia (Indonesia - Sulawesi) and to cocoa liquor obtained from cocoa beans originating from South-East Asia (Indonesia - Sulawesi) which are fermented with a microbial composition comprising either one of:
Composition A: *Lactobacillus plantarum, Lactobacillus fermentum, Acetobacter pasteurianus Lactobacillus diolivorans, Saccharomyces cerevisiae.*
Composition B: *Lactobacillus plantarum, Lactobacillus fermentum, Acetobacter pasteurianus Lactobacillus faeni, Saccharomyces cerevisiae.*
Composition C: *Lactobacillus plantarum, Lactobacillus fermentum, Acetobacter pasteurianus Lactobacillus paracasei, Saccharomyces cerevisiae.*
Composition D: *Lactobacillus plantarum, Lactobacillus fermentum, Acetobacter pasteurianus Lactobacillus parafarraginis, Lactobacillus farraginis, Saccharomyces cerevisiae.*
Composition E: *Lactobacillus plantarum, Lactobacillus fermentum, Acetobacter pasteurianus Lactobacillus parafarraginis, Lactobacillus diolivorans, Saccharomyces cerevisiae.*

Similar results are obtained as with the fermentation based on the microbial composition *Lactobacillus plantarum, Lactobacillus fermentum, Acetobacter pasteurianus, Lactobacillus parafarraginis* and *Saccharomyces cerevisiae.*

Hence, cocoa beans or derivatives thereof from different origins can be obtained to display similar, comparable or substantially equivalent or equal taste characteristics.

### Example 3 Acceptability of sensory characteristics

Cocoa liquor of different origin was evaluated in a taste panel as described in Example 1. The samples have been blind tasted by a liquor sensory panel. The taste evaluation has been done on liquor prepared from 10 independent lots of beans, both of South-East Asian (Indonesian origin) and Ivory Coast origins, which have been roasted on high temperature (Barth line: 120°C during about 70minutes, Buhler line: 130 - 135°C during about 60 minutes, respectively).

The South-East Asian beans have been fermented as described in Example 2 (CF - microbial composition comprising *Lactobacillus plantarum, Lactobacillus fermentum, Acetobacter pasteurianus, Lactobacillus parafarraginis* and *Saccharomyces cerevisiae*). The following taste characteristic attributes were evaluated: cacao, sour, putrid, and winey. Data is compiled and ranked in Table 13 for each taste characteristic as Pass (meaning acceptable), Warning (meaning reaching the limits of acceptability) or Fail (meaning not acceptable).

**Table 13**

| Attribute | Evaluation | Ivorian | CF SE Asian |
|---|---|---|---|
| Cacao | Pass | 2 | 5 |
| | Warning | 3 | 4 |
| | Fail | 5 | 1 |
| Sour | Pass | 8 | 8 |
| | Warning | 2 | 2 |
| | Fail | 0 | 0 |
| Putrid | Pass | 8 | 9 |
| | Warning | 1 | 0 |
| | Fail | 1 | 1 |
| Winey | Pass | 10 | 9 |
| | Warning | 0 | 0 |
| | Fail | 0 | 1 |

As is evident from Table 13, both liquor origins have comparable levels of passes, warnings and fails. In particular, liquor of Asian beans can be made to taste like liquor from African beans. This indicates that the South-East Asian beans are about equivalent to a typical Ivorian bean and that overall as well as specific sensory characteristics, in particular taste characteristics of Asian beans, in particular South-East Asian beans or derivatives thereof can be made to approximate or converge toward the sensory characteristics of West-African beans, or a derivative thereof.

### Example 4 Blends of cocoa derived material

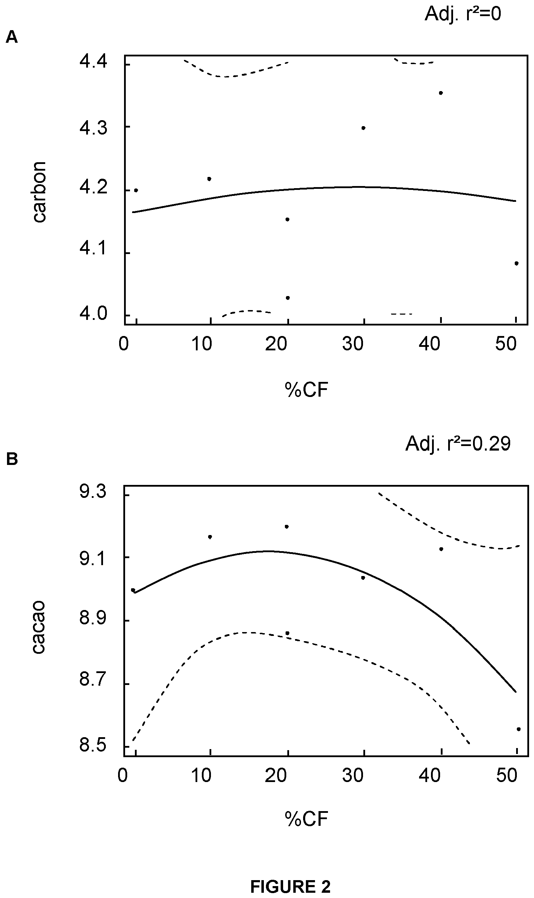

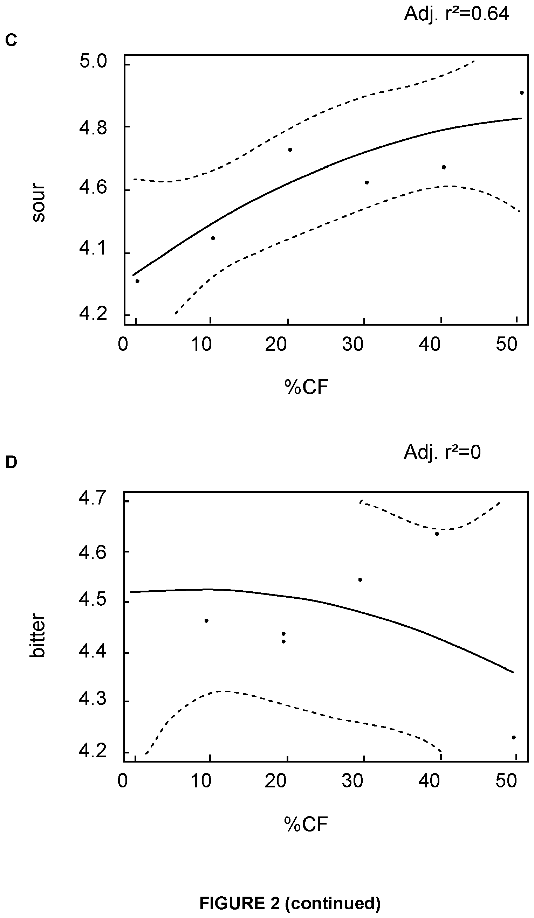

Blends of cocoa liquor of different origin were evaluated in a taste panel as described in Example 1. The samples have been blind tasted by a liquor sensory panel. The taste evaluation has been done on blends comprising varying amounts of liquor prepared from beans of South-East Asian (Indonesian origin) and Ivory Coast origins. The South-East Asian beans have been fermented as described in Example 2 (CF - microbial composition comprising *Lactobacillus plantarum, Lactobacillus fermentum, Acetobacter pasteurianus, Lactobacillus parafarraginis* and *Saccharomyces cerevisiae*). Figure 2 shows the evolution of various taste characteristics in function of the percentage of cocoa liquor of Indonesian origin (% CF) in a blend with cocoa liquor of Ivory Coast origin.

The results indicate that blends with varying amounts of cocoa derived material from different origins can be obtained with minimal variability in sensory characteristic scores.

## Claims

1. A bulk quantity of fermented cocoa beans or a derivative thereof of Asian origin having at least three sensory characteristics, wherein each of said sensory characteristics is scored on a scale between an minimum score (A) and a maximum score (B) and wherein the score of each of said sensory characteristic differs by less than 0.2x(B-A) of the score of the corresponding sensory characteristic as presented in the following Table:
| Sensory characteristic | Absolute score | Relative score |
|---|---|---|
| | (minimum score A = 0) | (minimum score A = 0) |
| | (maximum score B = 7) | (maximum score B = 1) |
| Astringent | 0 | 0 |
| Cocoa | 3 | 0.43 |
| Bitter | 1 | 0.14 |
| Flowery | 0 | 0 |
wherein said bulk quantity is at least 55 kg of cocoa beans or at least 1 ton of cocoa liquor.

2. The bulk quantity of fermented cocoa beans or a derivative thereof of Asian origin according to claim 1, which is substantially non-astringent and/or non-flowery.

3. The bulk quantity of fermented cocoa beans or a derivative thereof of Asian origin according to any one of claims 1 to 2, wherein said beans are dried and optionally roasted.

4. The bulk quantity of fermented cocoa beans or a derivative thereof of Asian origin according to any one of claims 1 to 3, wherein said Asian origin is Malaysian or Indonesian, more preferably Sulawesian.

5. The bulk quantity of fermented cocoa beans or a derivative thereof of Asian origin according to any one of claims 1 to 4, wherein said derivative is selected from the group comprising cocoa powder, cocoa butter, cocoa nibs, cocoa pulp, cocoa liquor, cocoa extract, cocoa flakes, cocoa mass, cocoa cake, and chocolate.

6. The bulk quantity of fermented cocoa beans or a derivative thereof of Asian origin according to any one of claims 1 to 5, having a composite sensory characteristic deviation which is scored as the average of the difference between the scores of the sensory characteristic of said bulk quantity of fermented cocoa beans, or a derivative thereof, of said Asian origin and the corresponding sensory characteristics as presented in any one of Tables 2 to 6, wherein said composite sensory characteristic deviation score is less than 0.1x(B-A).

7. A mixture or blend of the bulk quantity of fermented cocoa beans or a derivative thereof of Asian origin, as defined in any of claims 1 to 6, and of a bulk quantity of fermented cocoa beans or a derivative thereof of West-African origin.

8. An edible product comprising at least one derivative according to any one of claims 1 to 7, preferably said edible product is chocolate.

9. A method for obtaining the bulk quantity of fermented cocoa beans or a derivative thereof of Asian origin according to any one of claims 1 to 6, comprising the step of fermenting cocoa beans of said Asian origin with a microbial composition comprising:
- *Lactobacillus plantarum, Lactobacillus fermentum,* and *Acetobacter pasteurianus*,
- at least one additional *Lactobacillus* species selected from the group consisting of *Lactobacillus parafarraginis*, *Lactobacillus farraginis*, *Lactobacillus diolivorans*, *Lactobacillus faeni* and *Lactobacillus paracasei,* and
- at least one strain of a yeast species of a genus chosen from the group consisting of *Saccharomyces* and *Candida.*

10. A method for modifying at least three sensory characteristics of a bulk quantity of fermented cocoa beans or a derivative thereof of Asian origin, wherein each of said sensory characteristics is scored on a scale between an minimum score (A) and a maximum score (B), such that the score of each of said sensory characteristic differs by less than 0.2x(B-A) of the score of the corresponding sensory characteristic as presented in the following Table:
| Sensory characteristic | Absolute score | Relative score |
|---|---|---|
| | (minimum score A = 0) | (minimum score A = 0) |
| | (maximum score B = 7) | (maximum score B = 1) |
| Astringent | 0 | 0 |
| Cocoa | 3 | 0.43 |
| Bitter | 1 | 0.14 |
| Flowery | 0 | 0 |
comprising the step of fermenting cocoa beans of said Asian origin with a microbial composition comprising:
- *Lactobacillus plantarum, Lactobacillus fermentum,* and *Acetobacter pasteurianus*,
- at least one additional *Lactobacillus* species selected from the group consisting of *Lactobacillus parafarraginis*, *Lactobacillus farraginis*, *Lactobacillus diolivorans*, *Lactobacillus faeni* and *Lactobacillus paracasei,* and
- at least one strain of a yeast species of a genus chosen from the group consisting of *Saccharomyces* and *Candida.*

11. The method according to claim 9 or 10, wherein said Asian origin is Malaysian or Indonesian, more preferably Sulawesian.

12. The method according to any one of claims 9 to 11, further comprising the step of drying said cocoa beans after said fermenting, and optionally further comprising the step of roasting said cocoa beans after said drying.

13. The method according to any one of claims 9 to 12, wherein said derivative is selected from the group comprising cocoa powder, cocoa butter, cocoa nibs, cocoa pulp, cocoa liquor, cocoa extract, cocoa mass, cocoa cake, and chocolate.

## Patentansprüche

1. Massenmenge von fermentierten Kakaobohnen oder einem Derivat davon mit asiatischem Ursprung mit wenigstens drei sensorischen Merkmalen, wobei jedes der sensorischen Merkmale auf einer Skala zwischen einer Mindestbewertung (A) und einer Höchstbewertung(B) bewertet ist und wobei sich die Bewertung jedes der sensorischen Merkmale um weniger als 0,2 x (B - A) von der wie in der nachstehenden Tabelle gezeigten Bewertung des entsprechenden sensorischen Merkmals unterscheidet:
| Sensorisches Merkmal | Absolute Bewertung | Relative Bewertung |
|---|---|---|
| | (Mindestbewertung A = 0) | (Mindestbewertung A = 0) |
| | (Höchstbewertung B = 7) | (Höchstbewertung B = 1) |
| Adstrinqierend | 0 | 0 |
| Kakao | 3 | 0,43 |
| Bitter | 1 | 0,14 |
| Blumig | 0 | 0 |
wobei es sich bei der Massenmenge um wenigstens 55 kg Kakaobohnen oder wenigstens 1 Tonne Kakaoliquor handelt.

2. Massenmenge von fermentierten Kakaobohnen oder einem Derivat davon mit asiatischem Ursprung gemäß Anspruch 1, die im Wesentlichen nicht adstringierend und/oder nicht blumig ist.

3. Massenmenge von fermentierten Kakaobohnen oder einem Derivat davon mit asiatischem Ursprung gemäß einem der Ansprüche 1 bis 2, wobei die Bohnen getrocknet und gegebenenfalls geröstet sind.

4. Massenmenge von fermentierten Kakaobohnen oder einem Derivat davon mit asiatischem Ursprung gemäß einem der Ansprüche 1 bis 3, wobei der asiatische Ursprung malaysischer oder indonesischer, bevorzugter sulawesischer, Ursprung ist.

5. Massenmenge von fermentierten Kakaobohnen oder einem Derivat davon mit asiatischem Ursprung gemäß einem der Ansprüche 1 bis 4, wobei das Derivat ausgewählt ist aus der Gruppe umfassend Kakaopulver, Kakaobutter, Kakaostifte, Kakaopulpe, Kakaoliquor, Kakaoextrakt, Kakaoflocken, Kakaomasse, Kakaokuchen und Schokolade.

6. Massenmenge von fermentierten Kakaobohnen oder einem Derivat davon mit asiatischem Ursprung gemäß einem der Ansprüche 1 bis 5 mit einer zusammengesetzten Abweichung der sensorischen Merkmale, die als der Mittelwert der Unterschiede zwischen den Bewertungen der sensorischen Merkmale der Massenmenge von fermentierten Kakaobohnen oder einem Derivat davon mit dem asiatischem Ursprung und den entsprechenden, wie in einer der Tabellen 2 bis 6 aufgeführten sensorischen Merkmalen bewertet ist, wobei die Bewertung der zusammengesetzten Abweichung der sensorischen Merkmale kleiner als 0,1 x (B - A) ist.

7. Gemisch oder Mischung der Massenmenge von fermentierten Kakaobohnen oder einem Derivat davon mit asiatischem Ursprung gemäß einem der Ansprüche 1 bis 6 und einer Massenmenge von fermentierten Kakaobohnen oder einem Derivat davon mit westafrikanischem Ursprung.

8. Essbares Produkt, umfassend wenigstens ein Derivat gemäß einem der Ansprüche 1 bis 7, wobei das essbare Produkt vorzugsweise Schokolade ist.

9. Verfahren zum Herstellen der Massenmenge von fermentierten Kakaobohnen oder einem Derivat davon mit asiatischem Ursprung gemäß einem der Ansprüche 1 bis 6, umfassend den Schritt des Fermentierens von Kakaobohnen mit dem asiatischen Ursprung mit einer mikrobiellen Zusammensetzung, die umfasst:
- *Lactobacillus plantarum, Lactobacillus fermentum* und *Acetobacter pasteurianus,*
- wenigstens eine zusätzliche *Lactobacillus-*Spezies ausgewählt aus der Gruppe bestehend aus *Lactobacillus parafarraginis, Lactobacillus farraginis, Lactobacillus diolivorans, Lactobacillus faeni* und *Lactobacillus paracasei* und
- wenigstens einen Stamm einer Hefespezies einer Gattung ausgewählt aus der Gruppe bestehend aus *Saccharomyces* und *Candida.*

10. Verfahren zum Modifizieren von wenigstens drei sensorischen Merkmalen einer Massenmenge von fermentierten Kakaobohnen oder einem Derivat davon mit asiatischem Ursprung, wobei jedes der sensorischen Merkmale auf einer Skala zwischen einer Mindestbewertung (A) und einer Höchstbewertung (B) bewertet ist, so dass sich die Bewertung jedes der sensorischen Merkmale um weniger als 0,2 x (B - A) von dem wie in der nachstehenden Tabelle gezeigten Bewertung des entsprechenden sensorischen Merkmals unterscheidet:
| Sensorisches Merkmal | Absolute Bewertung | Relative Bewertung |
|---|---|---|
| | (Mindestbewertung A = 0) | (Mindestbewertung A = 0) |
| | (Höchstbewertunq B = 7) | (Höchstbewertunq B = 1) |
| Adstrinqierend | 0 | 0 |
| Kakao | 3 | 0,43 |
| Bitter | 1 | 0,14 |
| Blumig | 0 | 0 |
umfassend den Schritt des Fermentierens von Kakaobohnen mit dem asiatischen Ursprung mit einer mikrobiellen Zusammensetzung, die umfasst:
- *Lactobacillus plantarum, Lactobacillus fermentum* und *Acetobacter pasteurianus,*
- wenigstens eine zusätzliche *Lactobacillus-*Spezies ausgewählt aus der Gruppe bestehend aus *Lactobacillus parafarraginis, Lactobacillus farraginis, Lactobacillus diolivorans, Lactobacillus faeni* und *Lactobacillus paracasei* und
- wenigstens einen Stamm einer Hefespezies einer Gattung ausgewählt aus der Gruppe bestehend aus *Saccharomyces* und *Candida.*

11. Verfahren gemäß Anspruch 9 oder 10, wobei der asiatische Ursprung malaysischer oder indonesischer, bevorzugter sulawesischischer, Ursprung ist.

12. Verfahren gemäß einem der Ansprüche 9 bis 11, ferner umfassend den Schritt des Trocknens der Kakaobohnen nach dem Fermentieren und gegebenenfalls ferner umfassend den Schritt des Röstens der Kakaobohnen nach dem Trocknen.

13. Verfahren gemäß einem der Ansprüche 9 bis 12, wobei das Derivat ausgewählt ist aus der Gruppe umfassend Kakaopulver, Kakaobutter, Kakaostifte, Kakaopulpe, Kakaoliquor, Kakaoextrakt, Kakaomasse, Kakaoflocken, Kakaokuchen und Schokolade.

## Revendications

1. Quantité en vrac de fèves de cacao fermentées ou d'un dérivé de celles-ci d'origine asiatique, ayant au moins trois caractéristiques sensorielles, où chacune desdites caractéristiques sensorielles est notée sur une échelle entre un score minimum (A) et un score maximum (B) et où le score de chacune desdites caractéristiques sensorielles diffère de moins de 0,2 × (B-A) par rapport au score de la caractéristique sensorielle correspondante telle que présentée dans le Tableau suivant :
| Caractéristique sensorielle | Score absolu | Score relatif |
|---|---|---|
| | (score minimum A = 0) | (score minimum A = 0) |
| | (score maximum B = 7) | (score maximum B = 1) |
| Astringente | 0 | 0 |
| Cacao | 3 | 0,43 |
| Amère | 1 | 0,14 |
| Florale | 0 | 0 |
où ladite quantité en vrac est d'au moins 55 kg de fèves de cacao ou d'au moins 1 tonne de liqueur de cacao.

2. Quantité en vrac de fèves de cacao fermentées ou d'un dérivé de celles-ci d'origine asiatique selon la revendication 1, qui est sensiblement non astringente et/ou non florale.

3. Quantité en vrac de fèves de cacao fermentées ou d'un dérivé de celles-ci d'origine asiatique selon l'une quelconque des revendications 1 à 2, où lesdites fèves sont séchées et éventuellement torréfiées.

4. Quantité en vrac de fèves de cacao fermentées ou d'un dérivé de celles-ci d'origine asiatique selon l'une quelconque des revendications 1 à 3, où ladite origine asiatique est malaysienne ou indonésienne, plus préférablement de Sulawesi.

5. Quantité en vrac de fèves de cacao fermentées ou d'un dérivé de celles-ci d'origine asiatique selon l'une quelconque des revendications 1 à 4, où ledit dérivé est choisi dans le groupe constitué par la poudre de cacao, le beurre de cacao, les éclats de fève de cacao, la pulpe de cacao, la liqueur de cacao, l'extrait de cacao, les copeaux de cacao, la pâte de cacao, le tourteau de cacao et le chocolat.

6. Quantité en vrac de fèves de cacao fermentées ou d'un dérivé de celles-ci d'origine asiatique selon l'une quelconque des revendications 1 à 5, ayant un écart de caractéristique sensorielle composite qui est noté comme la moyenne de la différence entre les scores de la caractéristique sensorielle de ladite quantité en vrac de fèves de cacao fermentées, ou d'un dérivé de celles-ci, de ladite origine asiatique et lesdites caractéristiques sensorielles correspondantes telles que présentées selon l'un quelconque des Tableaux 2 à 6, où ledit score d'écart de caractéristique sensorielle composite est inférieur à 0,1 × (B-A).

7. Mélange ou assemblage de la quantité en vrac de fèves de cacao fermentées ou d'un dérivé de celles-ci d'origine asiatique, telle que définie selon l'une quelconque des revendications 1 à 6, et d'une quantité en vrac de fèves de cacao fermentées ou d'un dérivé de celles-ci d'origine ouest-africaine.

8. Produit comestible comprenant au moins un dérivé selon l'une quelconque des revendications 1 à 7, préférablement ledit produit comestible est du chocolat.

9. Méthode d'obtention de la quantité en vrac de fèves de cacao fermentées ou d'un dérivé de celles-ci d'origine asiatique selon l'une quelconque des revendications 1 à 6, comprenant l'étape consistant à fermenter des fèves de cacao de ladite origine asiatique avec une composition microbienne comprenant :
- *Lactobacillus plantarum, Lactobacillus fermentum,* et *Acetobacter pasteurianus,*
- au moins une autre espèce de *Lactobacillus* choisie dans le groupe constitué par *Lactobacillus parafarraginis, Lactobacillus farraginis, Lactobacillus diolivorans, Lactobacillus faeni* et *Lactobacillus paracasei,* et
- au moins une souche d'une espèce de levure d'un genre choisi dans le groupe constitué par *Saccharomyces* et *Candida.*

10. Méthode de modification d'au moins trois caractéristiques sensorielles d'une quantité en vrac de fèves de cacao fermentées ou d'un dérivé de celles-ci d'origine asiatique, où chacune desdites caractéristiques sensorielles est notée sur une échelle entre un score minimum (A) et un score maximum (B), de sorte que le score de chacune desdites caractéristiques sensorielles diffère de moins de 0,2 × (B-A) par rapport au score de la caractéristique sensorielle correspondante telle que présentée dans le Tableau suivant :
| Caractéristique sensorielle | Score absolu | Score relatif |
|---|---|---|
| | (score minimum A = 0) | (score minimum A = 0) |
| | (score maximum B = 7) | (score maximum B = 1) |
| Astringente | 0 | 0 |
| Cacao | 3 | 0,43 |
| Amère | 1 | 0,14 |
| Florale | 0 | 0 |
comprenant l'étape consistant à fermenter des fèves de cacao de ladite origine asiatique avec une composition microbienne comprenant :
- *Lactobacillus plantarum, Lactobacillus fermentum,* et *Acetobacter pasteurianus,*
- au moins une autre espèce de *Lactobacillus* choisie dans le groupe constitué par *Lactobacillus parafarraginis, Lactobacillus farraginis, Lactobacillus diolivorans, Lactobacillus faeni* et *Lactobacillus paracasei,* et
- au moins une souche d'une espèce de levure d'un genre choisi dans le groupe constitué par *Saccharomyces* et *Candida.*

11. Méthode selon la revendication 9 ou 10, où ladite origine asiatique est malaysienne ou indonésienne, plus préférablement de Sulawesi.

12. Méthode selon l'une quelconque des revendications 9 à 11, comprenant en outre l'étape consistant à sécher lesdites fèves de cacao après ladite fermentation, et éventuellement comprenant en outre l'étape consistant à torréfier lesdites fèves de cacao après ledit séchage.

13. Méthode selon l'une quelconque des revendications 9 à 12, où ledit dérivé est choisi dans le groupe constitué par la poudre de cacao, le beurre de cacao, les éclats de fève de cacao, la pulpe de cacao, la liqueur de cacao, l'extrait de cacao, la pâte de cacao, le tourteau de cacao et le chocolat.
